# EUROPEAN PATENT SPECIFICATION

(11) **EP 4 019 603 B1**
(45) Date of publication and mention of the grant of the patent: **02.10.2024**
(21) Application number: 20853807.4
(22) Date of filing: 04.08.2020
(51) Int. Cl.: C09J 11/04, C09J 11/06, C09J 171/00, C09J 183/05, C09J 183/07, C09J 171/02

(54) **CURABLE FLUOROPOLYETHER ADHESIVE COMPOSITION AND OPTICAL PARTS**
HÄRTBARE FLUOROPOLYETHERKLEBSTOFFZUSAMMENSETZUNG UND OPTISCHE TEILE
COMPOSITION ADHÉSIVE DURCISSABLE À BASE DE POLYÉTHER FLUORÉ ET ÉLÉMENTS OPTIQUES

(30) Priority: 21.08.2019 JP 2019150793
(43) Date of publication of application: 29.06.2022
(73) Proprietor: Shin-Etsu Chemical Co., Ltd., Tokyo 100-0005 (JP)
(72) Inventor: KOSHIKAWA, Hidenori, Annaka-shi, Gunma 379-0224 (JP)
(74) Representative: Ter Meer Steinmeister & Partner
(86) International application number: PCT/JP2020/029732
(87) International publication number: WO 2021/033529

(56) References cited:
- WO-A1-2012/133557
- JP-A- 2010 202 857
- JP-A- 2014 005 328
- JP-A- 2014 091 778
- JP-A- 2015 031 858
- JP-A- 2015 110 730
- JP-A- 2016 069 615
- JP-A- 2016 216 679
- No further relevant documents disclosed

## Description

### TECHNICAL FIELD

The present invention relates to a curable fluoropolyether adhesive agent composition and an optical component having a cured product of the composition.

### BACKGROUND ART

Conventionally, as a fluorine-containing curable composition, a composition containing a linear fluoropolyether compound having at least two alkenyl groups in one molecule and having a perfluoropolyether structure in a main chain, a fluorine-containing organohydrogensiloxane having two or more hydrogen atoms directly bonded to a silicon atom in one molecule, and a platinum group metal compound has been proposed, and it has been disclosed that a cured product having an excellent balance among heat resistance, chemical resistance, solvent resistance, releasability, water repellency, oil repellency, low temperature characteristics and the like is obtained from the composition (Patent Document 1: JP 2990646).

In addition, as a composition that gives a cured product having more improved acid resistance than a cured product obtained from the composition described in Patent Document 1, a composition in which a linear fluoropolyether compound is changed has been proposed (Patent Document 2: JP 5246190).

Furthermore, a composition in which self-adhesive property to a metal and a plastic substrate is imparted by adding an organopolysiloxane having a hydrosilyl group (SiH group) and an epoxy group and/or a trialkoxysilyl group to these compositions has been proposed (Patent Document 3: JP 3239717 and Patent Document 4: JP 5459033).

In addition, a composition in which an organosiloxane having a cyclic carboxylic anhydride residue is added to the composition having self-adhesive property to improve adhesive property has been proposed (Patent Document 5: JP 3562578).

Incidentally, it has been proposed to use a composition having self-adhesive property and giving a cured product having good light transmittance for an optical component. For example, Patent Document 6: JP 5653877 introduces use of a material for sealing an optical semiconductor element. In addition, Patent Document 7: JP 5956391 introduces use as a surface layer material of a fixing member in an image forming apparatus equipped with a light reflection sensor.

However, since a cured product of such a composition has insufficient rubber strength, defects such as cracks easily generated by external impact often occurred. Therefore, improvement of rubber strength has been desired.

In order to solve this problem, Patent Document 8: JP 5735457 has proposed to add spherical silica particles having a mean particle size of 0.050 to 10 µm. However, in this case, although impact resistance is improved, it has sometimes caused inconvenience that the light transmittance of the cured product is greatly reduced.

### PRIOR ART DOCUMENTS

### PATENT DOCUMENTS

Patent Document 1: JP 2990646
Patent Document 2: JP 5246190
Patent Document 3: JP 3239717
Patent Document 4: JP 5459033
Patent Document 5: JP 3562578
Patent Document 6: JP 5653877
Patent Document 7: JP 5956391
Patent Document 8: JP 5735457

### SUMMARY OF INVENTION

### TECHNICAL PROBLEM

The present invention has been made in view of the above circumstances, and an object of the present invention is to provide a curable fluoropolyether adhesive agent composition that gives a cured product having good light transmittance and good adhesive property and excellent rubber strength, and an optical component having a cured product of the composition.

### SOLUTION TO PROBLEM

As a result of intensive studies to achieve the above object, the present inventor has found that a curable fluoropolyether adhesive agent composition that gives a cured product having good light transmittance and good adhesive property and excellent rubber strength is obtained by using sodium fluoride as a component that improves rubber strength without significantly impairing the light transmittance with respect to a composition containing a predetermined component described later, and has completed the present invention.

Therefore, the present invention provides a curable fluoropolyether adhesive agent composition described below, and an optical component having a cured product of the composition.
[1] A curable fluoropolyether adhesive agent composition comprising:
   (A) 100 parts by weight of a linear polyfluoro compound having two or more alkenyl groups in one molecule and having a perfluoropolyether structure in a main chain,
   (B) a fluorine-containing organohydrogensiloxane having, in one molecule, a monovalent perfluoroalkyl group or a monovalent perfluorooxyalkyl group, or having a divalent perfluoroalkylene group or a divalent perfluorooxyalkylene group, and further having two or more hydrogen atoms directly bonded to silicon atoms (SiH groups), and free of an epoxy group and an alkoxy group directly bonded to a silicon atom in the molecule,
   (C) 0.1 to 120 parts by weight of sodium fluoride,
   (D) 0.1 to 2,000 ppm in terms of the weight of platinum group metal atoms with respect to the component (A) of a platinum group metal-based catalyst,
   (E) 0.1 to 20 parts by weight of an organopolysiloxane having, in one molecule, a hydrogen atom directly bonded to a silicon atom (SiH group), a monovalent perfluoroalkyl group or a monovalent perfluorooxyalkyl group, and an epoxy group or a trialkoxysilyl group bonded to a silicon atom via a divalent hydrocarbon group which may contain an oxygen atom, or both groups,
   wherein the compounding amount of the component (B) is an amount such that the amount of hydrogen atoms directly bonded to silicon atoms in the component (B) is 0.5 to 3 mol, based on 1 mol of alkenyl groups contained in the composition.
[2] The curable fluoropolyether adhesive agent composition according to [1], wherein the alkenyl group content of the linear polyfluoro compound as the component (A) is 0.005 to 0.3 mol/100 g.
[3] The curable fluoropolyether adhesive agent composition according to [1] or [2], wherein
   the perfluoropolyether structure of the component (A) contains a structure having the following general formula (1):

   -(CₐF₂ₐO)_{b}- (1)

   wherein a is an integer of 1 to 6, and b is an integer of 4 to 302.
[4] The curable fluoropolyether adhesive agent composition according to any one of [1] to [3], wherein the component (A) is a linear polyfluoro compound having the following general formula (2): 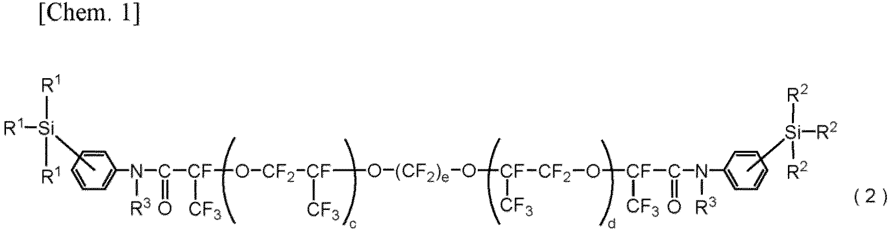 wherein R¹ and R² are alkenyl groups or monovalent hydrocarbon groups free of unsubstituted or substituted aliphatic unsaturated bond, R¹ is independent of each other, R² is also independent of each other, 2 or more of a total of 6 of R¹ and R² are alkenyl groups, R³ is each independently a hydrogen atom or an unsubstituted or substituted monovalent hydrocarbon group, c and d are each an integer of 1 to 150, the average value of c + d is 2 to 300, and e is an integer of 1 to 6,
   and/or the following general formula (3): 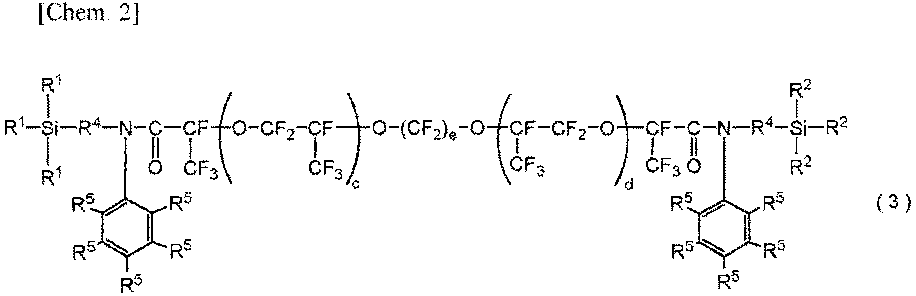 wherein R¹ and R² are alkenyl groups or monovalent hydrocarbon groups free of unsubstituted or substituted aliphatic unsaturated bond, R¹ is independent of each other, R² is also independent of each other, 2 or more of a total of 6 of R¹ and R² are alkenyl groups, R⁴ is each independently an alkylene group having 1 to 6 carbon atoms, R⁵ is each independently a hydrogen atom or an alkyl group having 1 to 4 carbon atoms which may be substituted with fluorine, c and d are each an integer of 1 to 150, the average value of c + d is 2 to 300, and e is an integer of 1 to 6.
[5] The curable fluoropolyether adhesive agent composition according to any one of [1] to [4], wherein the component (E) is a cyclic organopolysiloxane having the following general formula (16): 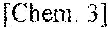 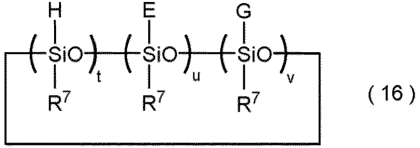 wherein t is an integer of 1 to 6, u is an integer of 1 to 4, v is an integer of 1 to 4, and t + u + v is an integer of 4 to 10, R⁷ is each independently an unsubstituted or substituted alkyl group having 1 to 20 carbon atoms or an aryl group having 6 to 20 carbon atoms, E is each independently a monovalent perfluoroalkyl group or a monovalent perfluorooxyalkyl group bonded to a silicon atom via a divalent hydrocarbon group which may contain a silicon atom, an oxygen atom and a nitrogen atom, and G is each independently an epoxy group or a trialkoxysilyl group bonded to a silicon atom via a divalent hydrocarbon group which may contain an oxygen atom, provided that the order of bonding of -(SiO)(H)R⁷-, - (SiO)(E)R⁷- and -(SiO)(G)R⁷- is not limited.
[6] The curable fluoropolyether adhesive agent composition according to any one of [1] to [5], which gives a cured product having a total light transmittance of 80% or more at a thickness of 2 mm measured according to JIS K7361-1.
[7] An optical component having a cured product of the curable fluoropolyether adhesive agent composition according to any one of [1] to [6].

### ADVANTAGEOUS EFFECTS OF INVENTION

According to the present invention, it is possible to provide a curable fluoropolyether adhesive agent composition that gives a cured product having good light transmittance and good adhesive property and excellent rubber strength, and an optical component having a cured product of the composition.

### DESCRIPTION OF EMBODIMENTS

Hereinafter, the present invention is described in detail.

### <Curable fluoropolyether adhesive agent composition>

The curable fluoropolyether adhesive agent composition of the present invention contains the following components (A) to (E).

### [Component (A)]

The component (A) is a linear polyfluoro compound having two or more alkenyl groups in one molecule and further having a perfluoropolyether structure in a main chain.

The alkenyl group contained in the component (A) is preferably an alkenyl group having 2 to 8 carbon atoms, particularly 2 to 6 carbon atoms and having a CH₂=CH- structure at the terminal (external olefin), and examples thereof include a vinyl group, an allyl group, a propenyl group, an isopropenyl group, a butenyl group, a hexenyl group, and the like, and among them, a vinyl group and an allyl group are particularly preferred.

The alkenyl group content of the linear polyfluoro compound as the component (A) is preferably 0.005 to 0.3 mol/100 g, and further preferably 0.007 to 0.2 mol/100 g. If the alkenyl group content is 0.005 mol/100 g or more, the degree of crosslinking of the composition of the present invention becomes sufficient, and there is no possibility that curing defects occur. On the other hand, if the alkenyl group content is 0.3 mol/100 g or less, there is no possibility that the mechanical properties of the cured product (fluoropolyether rubber elastic body) obtained by curing the composition of the present invention are impaired.

The perfluoropolyether structure of the component (A) contains many repeating units of

-CₐF₂ₐO-

wherein a is an integer of 1 to 6.

Examples thereof include those having the following general formula (1):

-(CₐF₂ₐO)_{b}- (1)

wherein a is an integer of 1 to 6, and b is an integer of 4 to 302, preferably an integer of 8 to 202.

Examples of the repeating units of -CₐF₂ₐO- include units of the following formulas:

-CF₂O- ,

-CF₂CF₂O- ,

-CF(CF₃)O- ,

-CF₂CF₂CF₂O- ,

-CF(CF₃)CF₂O- ,

-CF₂CF₂CF₂CF₂O-,

-CF₂CF₂CF₂CF₂CF₂CF₂O-,

-C(CF₃)₂O-

and the like.

Among them, in particular, the repeating units of the following formulas:

-CF₂O- ,

-CF₂CF₂O-,

-CF₂CF₂CF₂O- ,

and

-CF(CF₃)CF₂O-

are preferred.

The perfluoropolyether structure of the component (A) may be composed of one of the above repeating units, or may be composed of a combination of two or more thereof.

Preferred examples of the component (A) include linear polyfluoro compounds having the following general formula (2) and the following general formula (3): 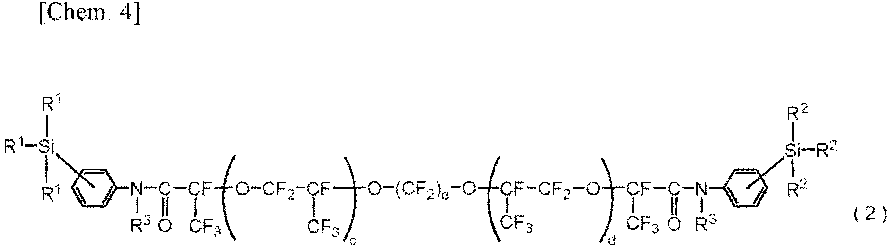 wherein R¹ and R² are alkenyl groups or monovalent hydrocarbon groups free of unsubstituted or substituted aliphatic unsaturated bond, R¹ is independent of each other, R² is also independent of each other, 2 or more of a total of 6 of R¹ and R² are alkenyl groups, R³ is each independently a hydrogen atom or an unsubstituted or substituted monovalent hydrocarbon group, c and d are each an integer of 1 to 150, the average value of c + d is 2 to 300, and e is an integer of 1 to 6, and 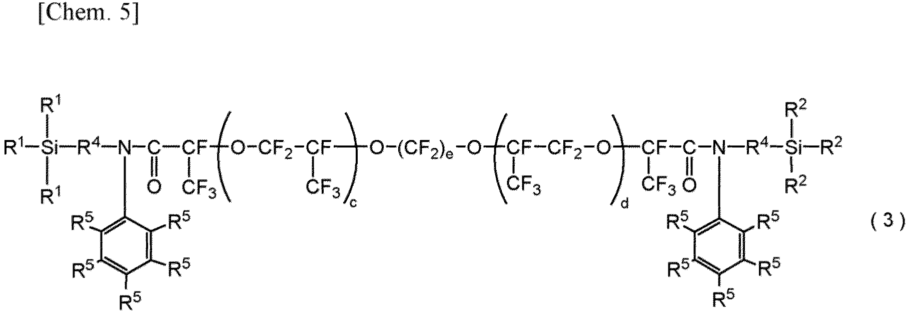 wherein R¹ and R² are alkenyl groups or monovalent hydrocarbon groups free of unsubstituted or substituted aliphatic unsaturated bond, R¹ is independent of each other, R² is also independent of each other, 2 or more of a total of 6 of R¹ and R² are alkenyl groups, R⁴ is each independently an alkylene group having 1 to 6 carbon atoms, R⁵ is each independently a hydrogen atom or an alkyl group having 1 to 4 carbon atoms which may be substituted with fluorine, c and d are each an integer of 1 to 150, the average value of c + d is 2 to 300, and e is an integer of 1 to 6.

Here, examples of the alkenyl group contained in R¹ and R² include the same as those exemplified as the alkenyl group contained in the component (A), and the monovalent hydrocarbon group free of unsubstituted or substituted aliphatic unsaturated bond other than the alkenyl group is preferably a monovalent hydrocarbon group having 1 to 12 carbon atoms, particularly preferably a monovalent hydrocarbon group having 1 to 10 carbon atoms, and specific examples include alkyl groups such as a methyl group, an ethyl group, a propyl group, a butyl group, a hexyl group, a cyclohexyl group, and an octyl group; aryl groups such as a phenyl group and a tolyl group; aralkyl groups such as a benzyl group and a phenylethyl group; and the like, and monovalent hydrocarbon groups in which some or all of hydrogen atoms of these groups are substituted with halogen atoms such as fluorine, and the like. As R¹ and R², among them, a vinyl group, an allyl group, a methyl group, and an ethyl group are particularly preferred.

Note that R¹ is independent of each other, R² is also independent of each other, and 2 or more of a total of 6 (2 to 6) of R¹ and R² are alkenyl groups, but it is preferable that 1 or more of each of R¹ and R² (that is, 1 to 3 each of R¹ and R²) are alkenyl groups, particularly vinyl groups or allyl groups.

Examples of the unsubstituted or substituted monovalent hydrocarbon group contained in R³ include the same groups as those exemplified above for the monovalent hydrocarbon group free of unsubstituted or substituted aliphatic unsaturated bond for R¹ and R². R³ is preferably a hydrogen group, a methyl group or an ethyl group.

R⁴ is an alkylene group having 1 to 6 carbon atoms, preferably 2 to 6 carbon atoms, and specific examples thereof include a methylene group, an ethylene group, a propylene group (trimethylene group, methylethylene group), a butylene group (tetramethylene group, methylpropylene group), a hexamethylene group, and the like, and an ethylene group and a propylene group are particularly preferred.

R⁵ is each independently a hydrogen atom or an alkyl group having 1 to 4 carbon atoms which may be substituted with fluorine, and specific examples of the alkyl group having 1 to 4 carbon atoms which may be substituted with fluorine include alkyl groups such as a methyl group, an ethyl group, a propyl group and a butyl group, and groups in which some or all of hydrogen atoms of these groups are substituted with fluorine atoms, for example, a trifluoromethyl group, and the like. Among them, a hydrogen atom is preferred.

Each of c and d is preferably an integer of 1 to 150, more preferably an integer of 1 to 100, and the average value of c + d is preferably 2 to 300, more preferably 6 to 200. Also, e is preferably an integer of 1 to 6, more preferably an integer of 1 to 4.

Specific examples of the linear polyfluoro compound having the general formula (2) include those having the following formulas. Me represents a methyl group, and Et represents an ethyl group. 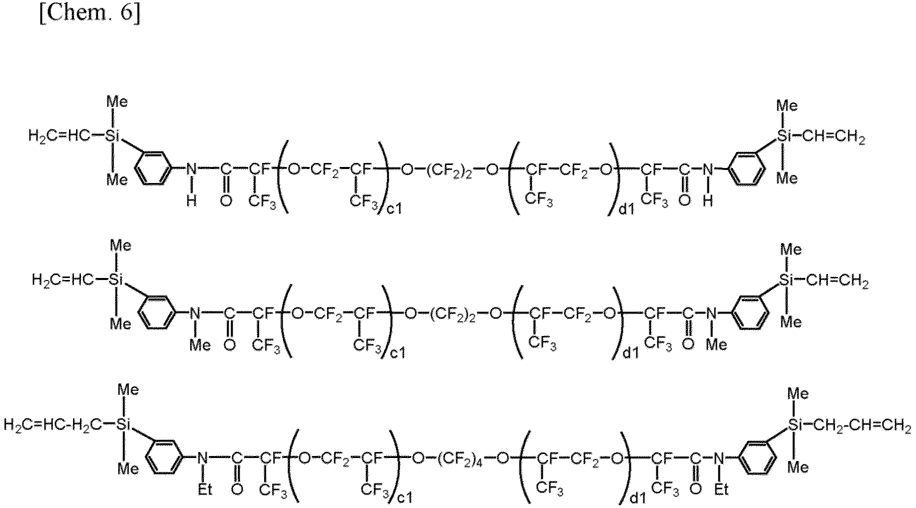 wherein c1 and d1 are each an integer of 1 to 150. 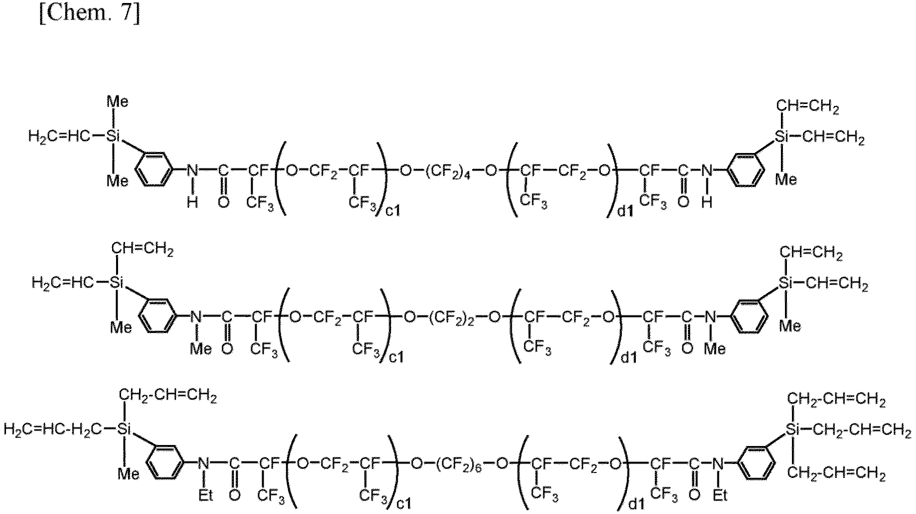 wherein c1 and d1 are each an integer of 1 to 150. 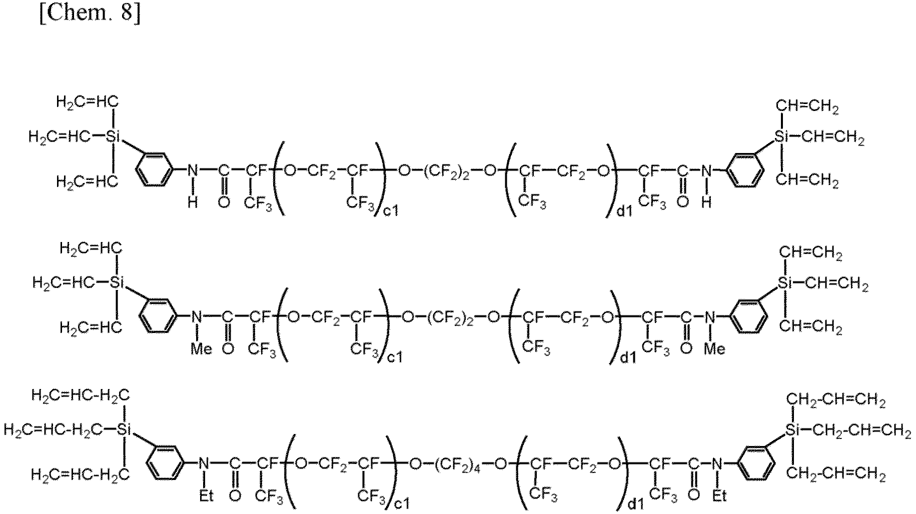 wherein c1 and d1 are each an integer of 1 to 150.

Specific examples of the linear polyfluoro compound having the general formula (3) include those having the following formulas: 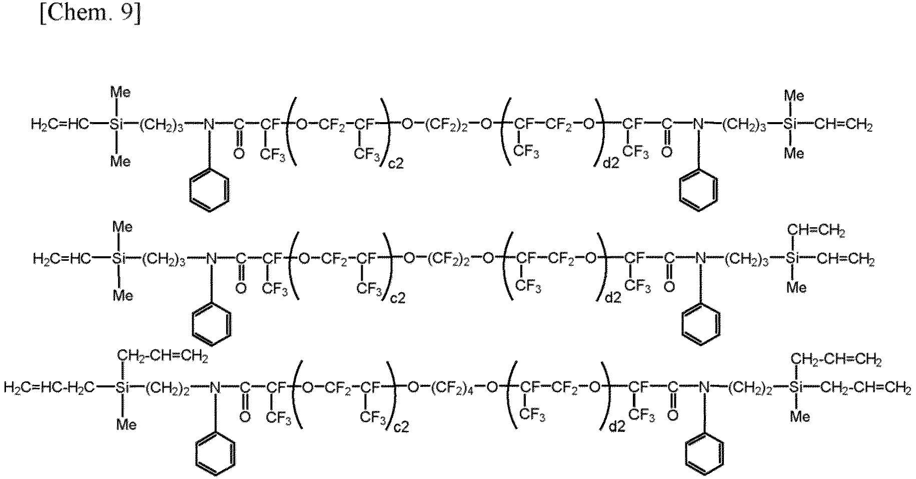 wherein c2 and d2 are each an integer of 1 to 150, and 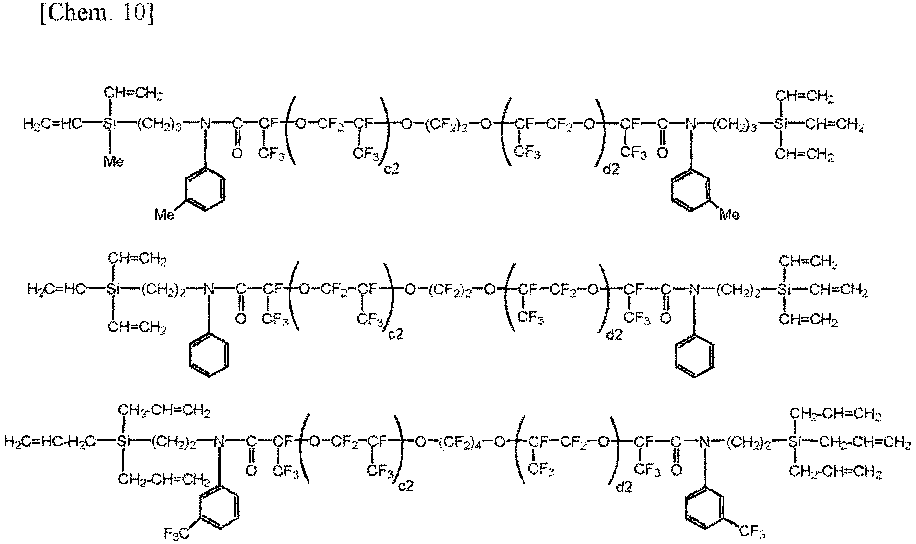 wherein c2 and d2 are each an integer of 1 to 150.

In the present invention, the viscosity can be measured by a rotational viscometer (for example, BL type, BH type, BS type, cone plate type, rheometer, and the like), and in particular, the viscosity (23°C) of the linear polyfluoro compound having the general formula (2) or (3) is preferably 500 to 100,000 mPa s, particularly 1,000 to 50,000 mPa·s in the viscosity measurement specified in JIS K7117-1. If the viscosity is 500 mPa·s or more, there is no possibility that storage stability of the composition of the present invention is deteriorated, and if the viscosity is 100,000 mPa s or less, there is no possibility that extensibility of the resulting composition is deteriorated.

Further, the polymerization degree (or molecular weight) of the linear polyfluoro compound reflecting the number of repetitions of the perfluorooxyalkylene unit constituting the perfluoropolyether structure of a main chain can be determined, for example, as a numerical average polymerization degree (or numerical average molecular weight average molecular weight) in terms of polystyrene in gel permeation chromatography (GPC) analysis using a fluorine-based solvent as a developing solvent. Furthermore, the numerical average polymerization degree (or numerical average molecular weight average molecular weight) of the linear polyfluoro compound can also be calculated from ¹⁹F-NMR.

These linear polyfluoro compounds can be used singly or in combination of two or more kinds thereof. That is, among the linear polyfluoro compounds having the general formula (2) or (3), one kind can be used singly or two or more kinds can be used in combination, and the linear polyfluoro compounds having the general formulas (2) and (3) can also be used in combination.

### [Component (B)]

The component (B) is a fluorine-containing organohydrogensiloxane having, in one molecule, a monovalent perfluoroalkyl group or a monovalent perfluorooxyalkyl group, or having a divalent perfluoroalkylene group or a divalent perfluorooxyalkylene group, and further having two or more hydrogen atoms directly bonded to silicon atoms (SiH groups), and free of an epoxy group and an alkoxy group directly bonded to a silicon atom in the molecule, preferably a fluorine-containing organohydrogensiloxane having one or more of the monovalent or divalent fluorine-containing organic groups and two or more hydrogen atoms directly bonded to silicon atoms in one molecule, and free of other functional groups other than SiH groups such as an epoxy group and an alkoxy group directly bonded to a silicon atom, and functions as a crosslinking agent of the component (A).

Here, the "other functional groups" exclude divalent polar groups (polar structures) such as an ether-bonding oxygen atom, an amide bond, a carbonyl bond and an ester bond, which may be contained in a divalent linking group which links a perfluoroalkyl group, a perfluorooxyalkyl group, a perfluoroalkylene group or a perfluorooxyalkylene group to a silicon atom constituting polysiloxane.

The component (B) is clearly distinguished from the component (E) as an adhesion-imparting agent described later in that the component (B) does not have an epoxy group and an alkoxy group (alkoxysilyl group) directly bonded to a silicon atom in the molecule.

The monovalent perfluoroalkyl group, the monovalent perfluorooxyalkyl group, the divalent perfluoroalkylene group, and the divalent perfluorooxyalkylene group are groups introduced from the viewpoint of compatibility with the component (A), dispersibility, uniformity after curing, and the like.

Examples of the monovalent perfluoroalkyl group or monovalent perfluorooxyalkyl group include groups having the following general formula (4) or (5):

C_{f}F_{2f+1}- (4)

wherein f is an integer of 1 to 10, preferably an integer of 3 to 7. 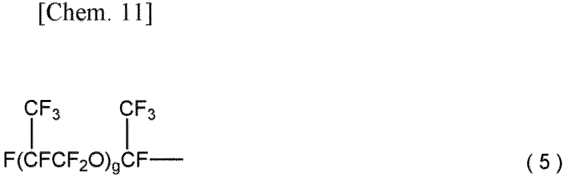 wherein g is an integer of 1 to 50, preferably an integer of 2 to 30.

Examples of the divalent perfluoroalkylene group or divalent perfluorooxyalkylene group include groups having the following general formulas (6) to (8):

-CₕF₂ₕ- (6)

wherein h is an integer of 1 to 20, preferably an integer of 2 to 10, 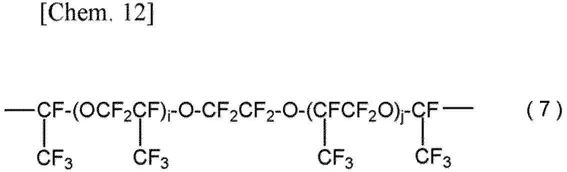
wherein i and j are each an integer of 1 or more, preferably an integer of 1 to 100, and the average value of i + j is 2 to 200, preferably 2 to 100,

   -CF₂O-(CF₂CF₂O)ₖ(CF₂O)ₗ-CF₂- (8)
wherein k and l are each an integer of 1 to 50, preferably an integer of 1 to 30, the average value of k + l is 2 to 100, preferably 2 to 60, and the repeating units may be randomly arranged.

In addition, it is preferable that the perfluoroalkyl group, the perfluorooxyalkyl group, the perfluoroalkylene group, or the perfluorooxyalkylene group and the silicon atom constituting polysiloxane are connected by a divalent linking group. The divalent linking group is preferably an unsubstituted or substituted divalent hydrocarbon group having 2 to 13 carbon atoms, particularly 2 to 8 carbon atoms, which may have an oxygen atom, a nitrogen atom, or a silicon atom. Specifically, alkylene groups, arylene groups, and combinations thereof, or groups in which one or more kinds of structures selected from the group consisting of an ether-bonding oxygen atom, an amide bond, a carbonyl bond, an ester bond, and diorganosilylene groups such as a dimethylsilylene group are intervened in these groups or the like can be exemplified, and examples thereof include those having 2 to 13 carbon atoms such as

-CH₂CH₂- ,

-CH₂CH₂CH₂- ,

-CH₂CH₂CH₂OCH₂- ,

-CH₂CH₂CH₂-NH-CO- ,

-CH₂CH₂CH₂-N(Ph)-CO- ,

-CH₂CH₂CH₂-N(CH₃)-CO- ,

-CH₂CH₂CH₂-N(CH₂CH₃)-CO- ,

-CH₂CH₂CH₂-N(CH(CH₃)₂)-CO- ,

-CH₂CH₂CH₂-O-CO- ,

-CH₂CH₂-Si(CH₃)₂-Ph'-N(CH₃)-CO- ,

-CH₂CH₂CH₂-Si(CH₃)₂-Ph'-N(CH₃)-CO-

provided that Ph is a phenyl group and Ph' is a phenylene group.
In the above structure, it is preferred that the left bond hand is bonded to the silicon atom constituting polysiloxane, and the right bond hand is bonded to the perfluoroalkyl group, the perfluorooxyalkyl group, the perfluoroalkylene group, or the perfluorooxyalkylene group.

Further, the monovalent or divalent fluorine-containing organic group and the monovalent substituent bonded to the silicon atom other than the hydrogen atom directly bonded to the silicon atom in the fluorine-containing organohydrogensiloxane as the component (B) are an unsubstituted or substituted alkyl group having 1 to 20, preferably 1 to 12 carbon atoms or an aryl group having 6 to 20, preferably 6 to 12 carbon atoms, and examples thereof include alkyl groups such as a methyl group, an ethyl group, a propyl group, a butyl group, a hexyl group, a cyclohexyl group, an octyl group, and a decyl group; aryl groups such as a phenyl group, a tolyl group, and a naphthyl group, and for example, a chloromethyl group, a chloropropyl group, and a cyanoethyl group in which some or all of hydrogen atoms of these groups are substituted with a halogen atom such as a chlorine atom, a cyano group, and the like. Among them, a methyl group is preferred. The fluorine-containing organohydrogensiloxane as the component (B) does not have an epoxy group and an alkoxy group.

The structure of the fluorine-containing organohydrogensiloxane as the component (B) may be any of cyclic, chain, three-dimensional network, and a combination thereof. The number of silicon atoms of the fluorine-containing organohydrogensiloxane is not particularly limited, but is usually about 2 to 60, preferably about 3 to 30, and more preferably about 4 to 30.

Moreover, the component (B) has 2 or more, preferably 3 or more SiH groups in one molecule, and the content of the SiH groups is preferably 0.0001 to 0.02 mol/g, further preferably 0.0002 to 0.01 mol/g.

Examples of the component (B) include those having the following general formulas (9) to (15): 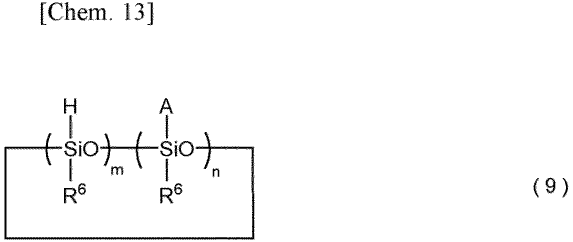 wherein A is each independently the monovalent perfluoroalkyl group or the monovalent perfluorooxyalkyl group bonded to a silicon atom constituting siloxane via a divalent hydrocarbon group which may have an oxygen atom, a nitrogen atom or a silicon atom, described above, and examples of the monovalent perfluoroalkyl group or the monovalent perfluorooxyalkyl group include groups having the general formula (4) or (5), R⁶ is each independently the unsubstituted or substituted alkyl group having 1 to 20, preferably 1 to 12 carbon atoms, or an aryl group having 6 to 20, preferably 6 to 12 carbon atoms, described above, m is an integer of 2 to 6, preferably an integer of 3 to 6, n is an integer of 1 to 4, preferably an integer of 1 to 3, and m + n is an integer of 4 to 10, preferably an integer of 4 to 9, provided that the order of bonding of -(Si(H)(R⁶)O)- and -(Si(A)(R⁶)O)- is not limited. 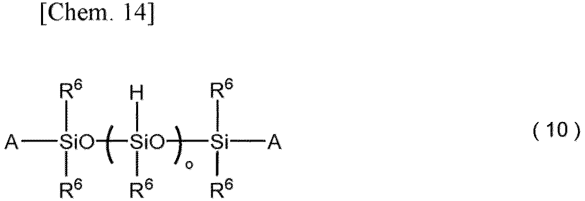 wherein A is each independently the same as A above, R⁶ is each independently the same as R⁶ above, and o is an integer of 2 to 50, preferably an integer of 3 to 30. 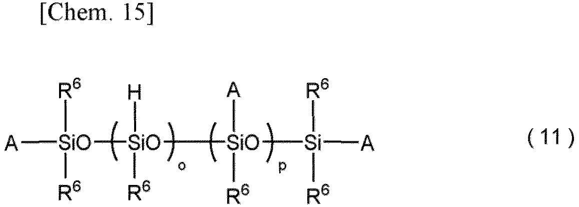 wherein A is each independently the same as A above, R⁶ is each independently the same as R⁶ above, and o is an integer of 2 to 50, preferably an integer of 3 to 30, p is an integer of 1 to 40, preferably an integer of 1 to 20, and o + p is an integer of 4 to 60, preferably an integer of 4 to 50, provided that the order of bonding of -(Si(H)(R⁶)O)- and -(Si(A)(R⁶)O)-is not limited. 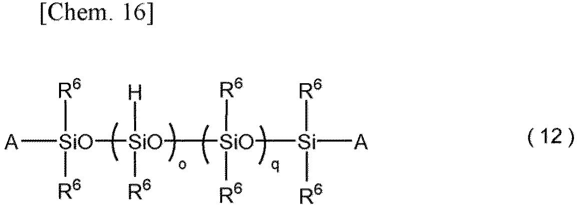 wherein A is each independently the same as A above, R⁶ is each independently the same as R⁶ above, and o is an integer of 2 to 50, preferably an integer of 3 to 30, q is an integer of 1 to 40, preferably an integer of 1 to 20, and o + q is an integer of 4 to 60, preferably an integer of 4 to 50, provided that the order of bonding of -(Si(H)(R⁶)O)- and -(Si(R⁶)₂O)- is not limited. 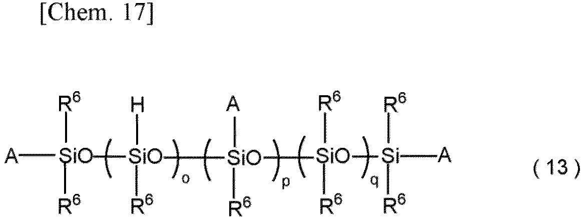 wherein A is each independently the same as A above, R⁶ is each independently the same as R⁶ above, and o is an integer of 2 to 50, preferably an integer of 3 to 30, p is an integer of 1 to 40, preferably an integer of 1 to 20, q is an integer of 1 to 40, preferably an integer of 1 to 20, and o + p + q is an integer of 5 to 60, preferably an integer of 5 to 50, provided that the order of bonding of -(Si(H)(R⁶)O)-, -(Si(A)(R⁶)O)- and -(Si(R⁶)₂O)- is not limited. 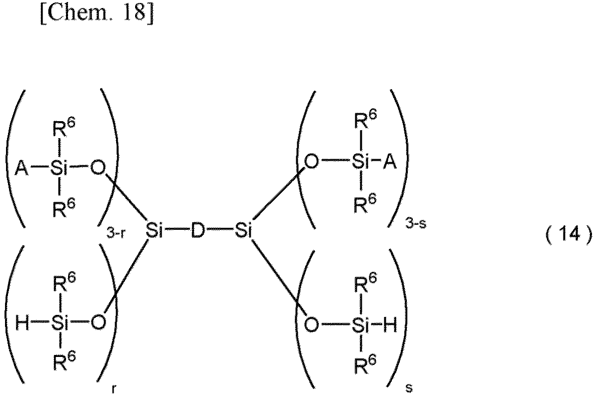 wherein D is a divalent perfluoroalkylene group or a divalent perfluorooxyalkylene group each bonded to an adjacent silicon atom via an oxygen atom, an alkylene group, or a divalent hydrocarbon group which may have an oxygen atom or a nitrogen atom, and examples of the divalent perfluoroalkylene group or the divalent perfluorooxyalkylene group include any of the groups having the general formulas (6) to (8), A is each independently the same as A above, R⁶ is each independently the same as R⁶ above, and r is an integer of 0 to 3, s is an integer of 0 to 3, and r + s is an integer of 2 to 6, preferably an integer of 3 to 5. 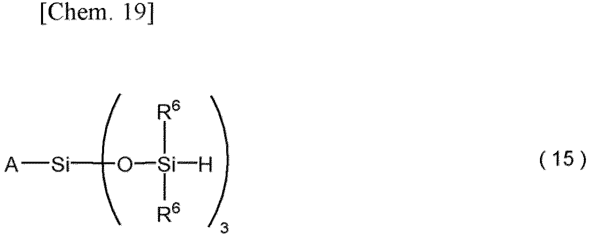 wherein A is the same as A above, and R⁶ is each independently the same as R⁶ above.

Specific examples of the component (B) include the following compounds. These compounds may be used singly or in combination of two or more thereof. In the following formulas, Me represents a methyl group, and Ph represents a phenyl group. In addition, each siloxane unit may be randomly arranged. 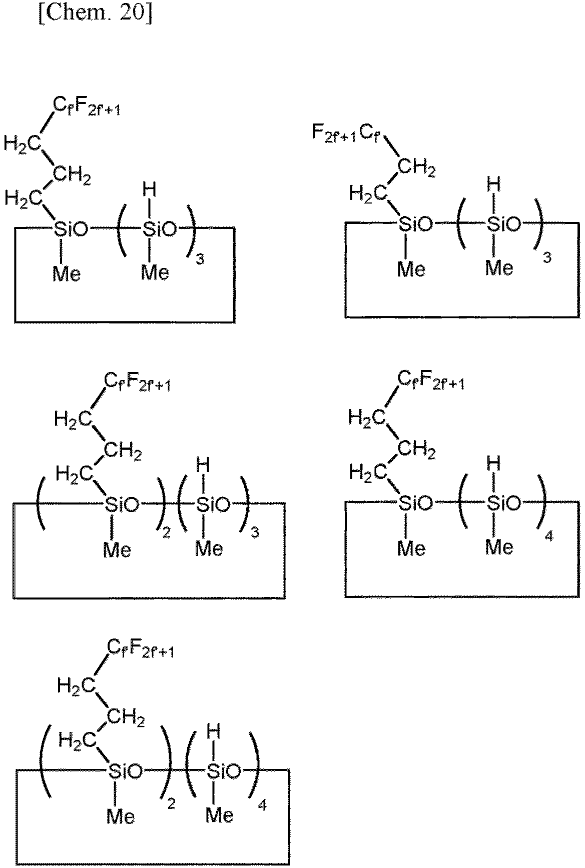 wherein f' is an integer of 1 to 10. 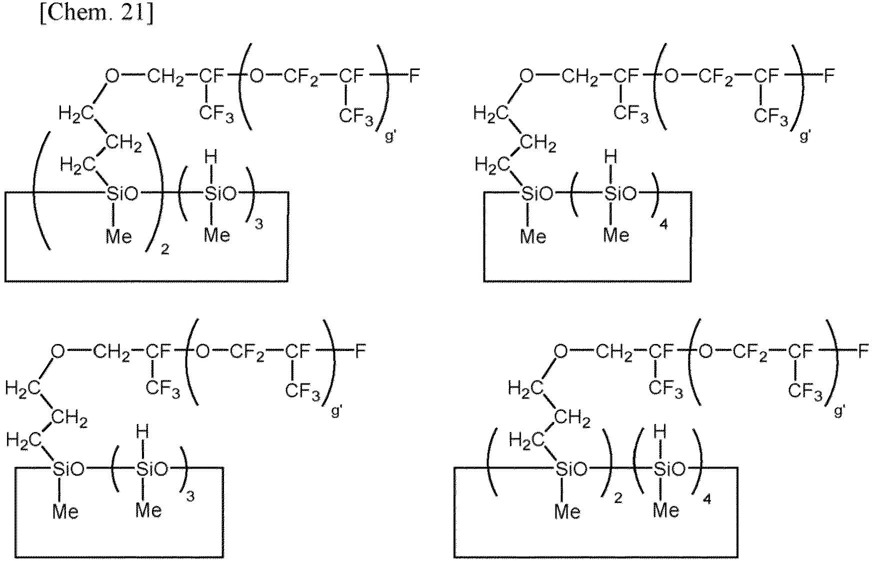 wherein g' is an integer of 1 to 50. 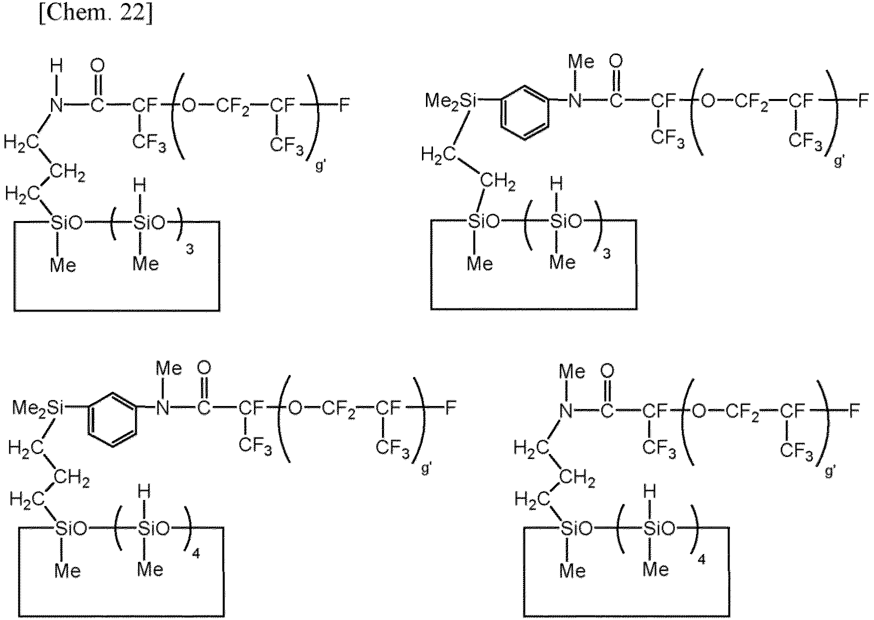 wherein g' is an integer of 1 to 50. 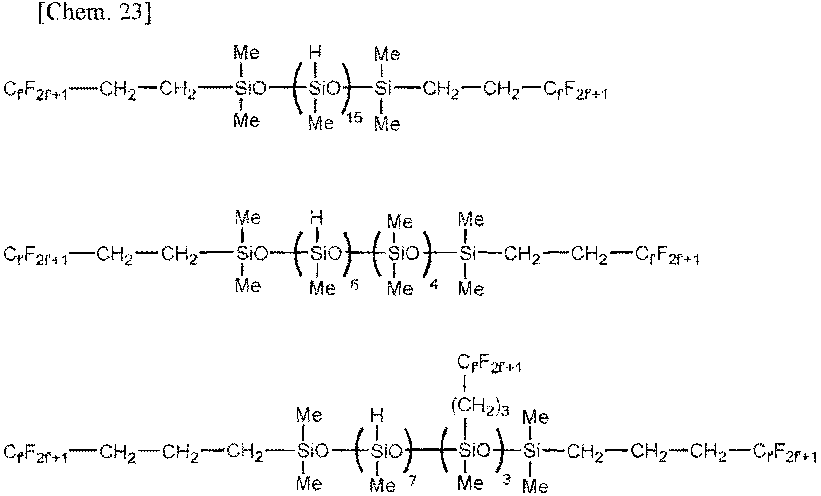 wherein f' is an integer of 1 to 10. 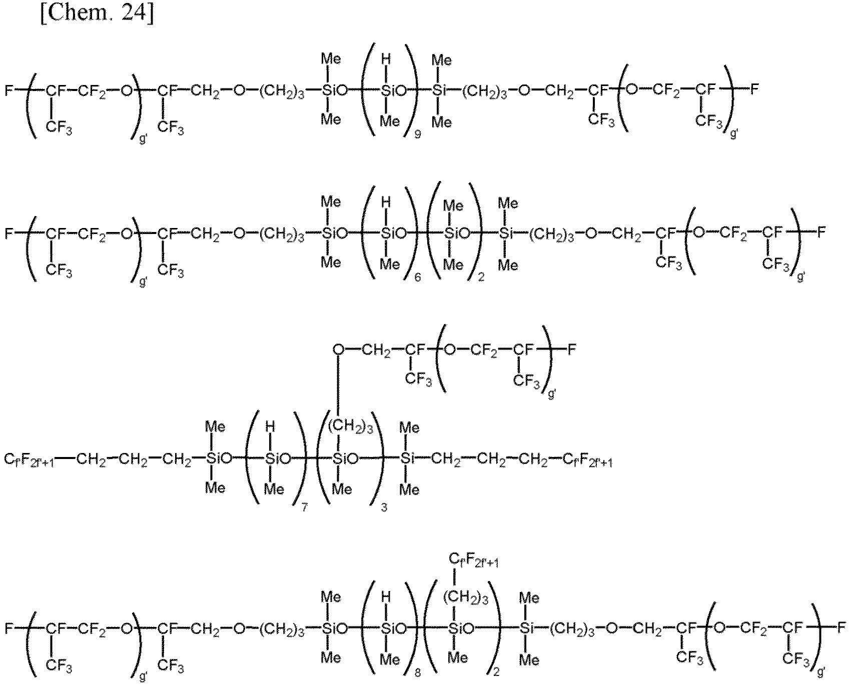 wherein f' is an integer of 1 to 10 and g' is an integer of 1 to 50. 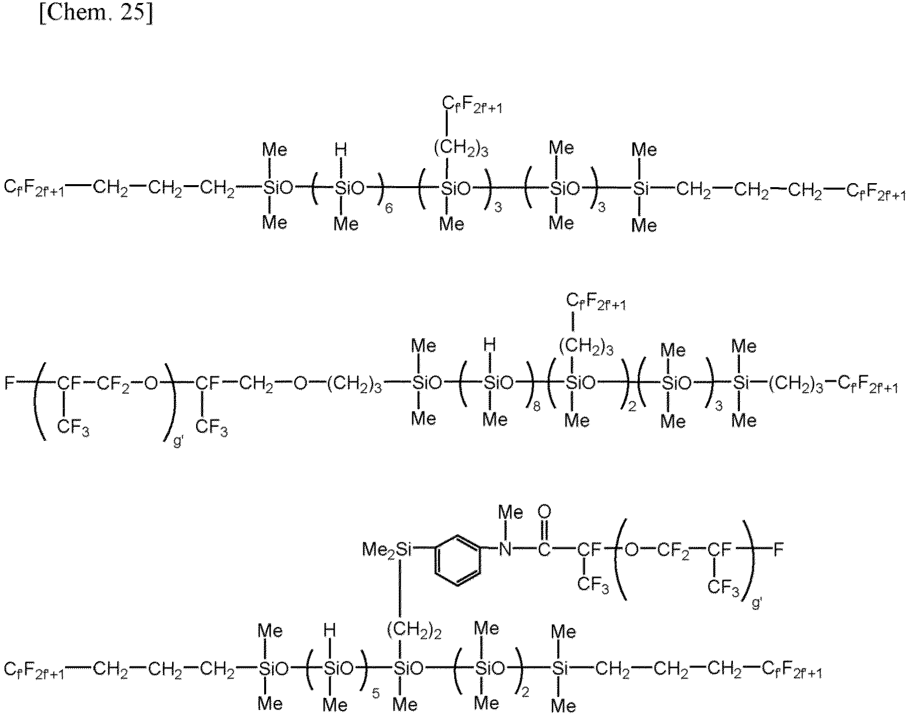 wherein f' is an integer of 1 to 10 and g' is an integer of 1 to 50. 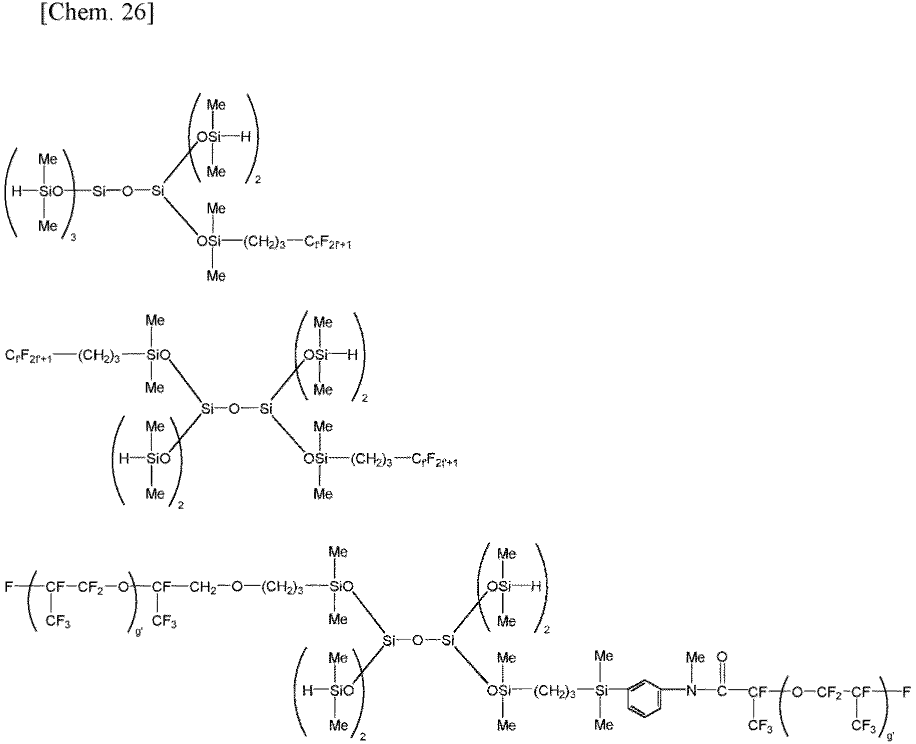 wherein f' is an integer of 1 to 10 and g' is an integer of 1 to 50. 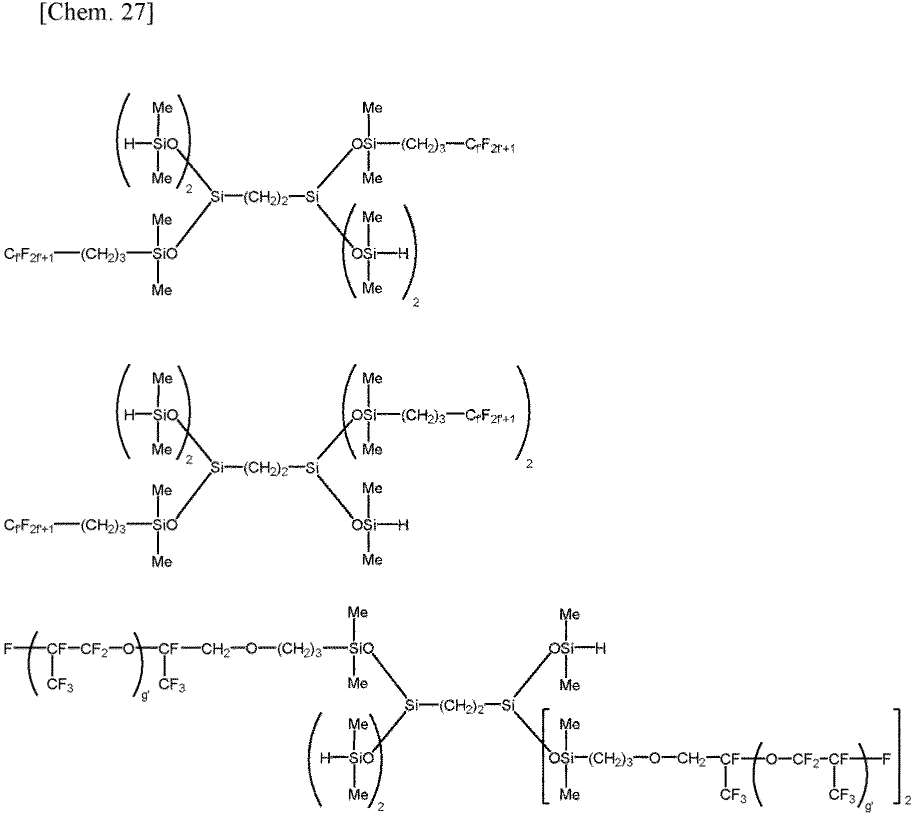 wherein f' is an integer of 1 to 10 and g' is an integer of 1 to 50. 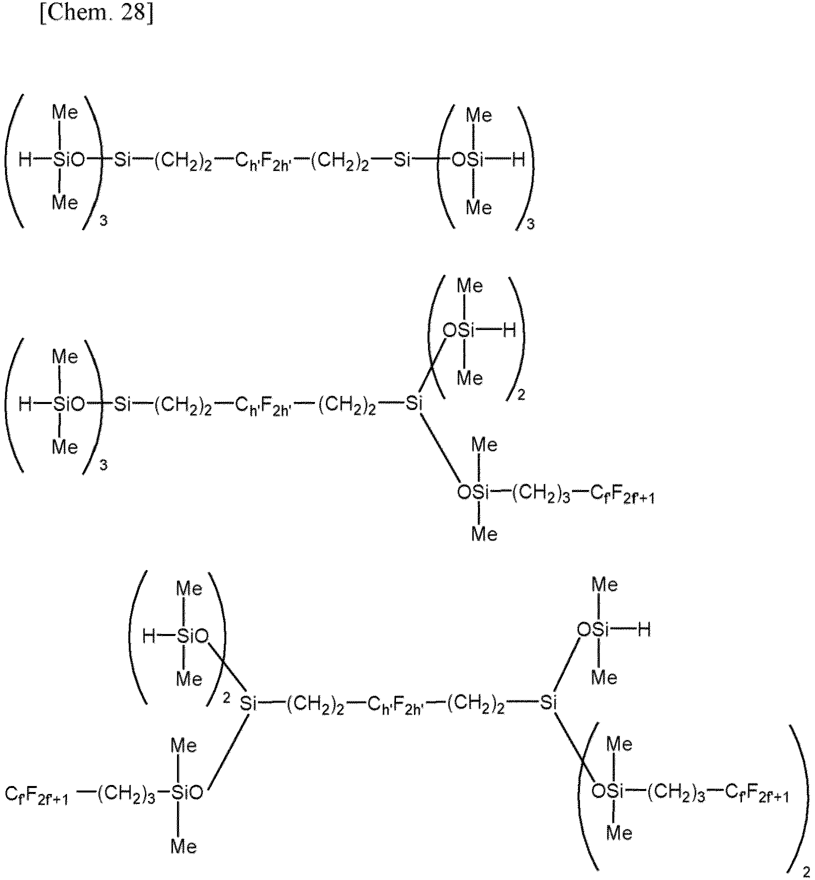 wherein f' is an integer of 1 to 10 and h' is an integer of 1 to 20. 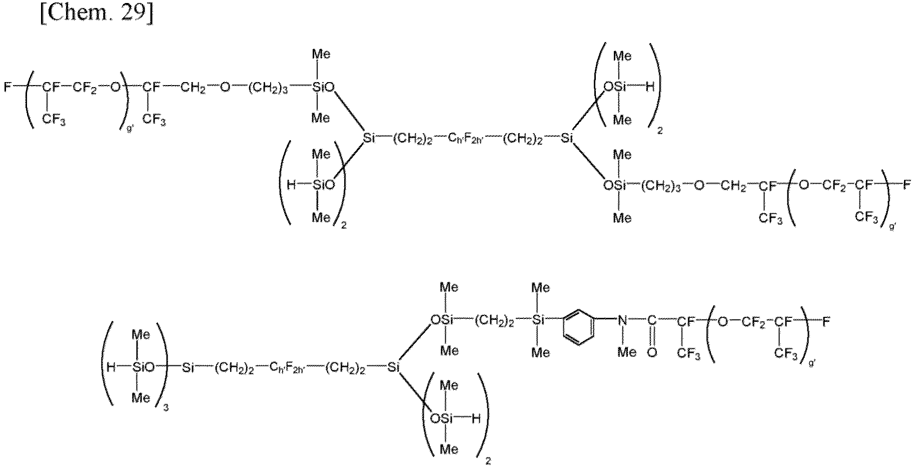 wherein g' is an integer of 1 to 50 and h' is an integer of 1 to 20. 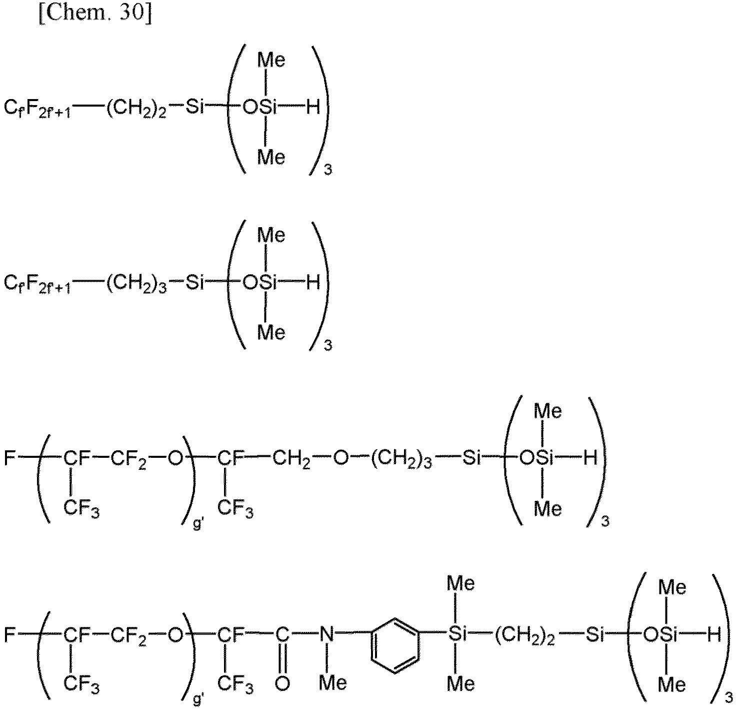 wherein f' is an integer of 1 to 10 and g' is an integer of 1 to 50. 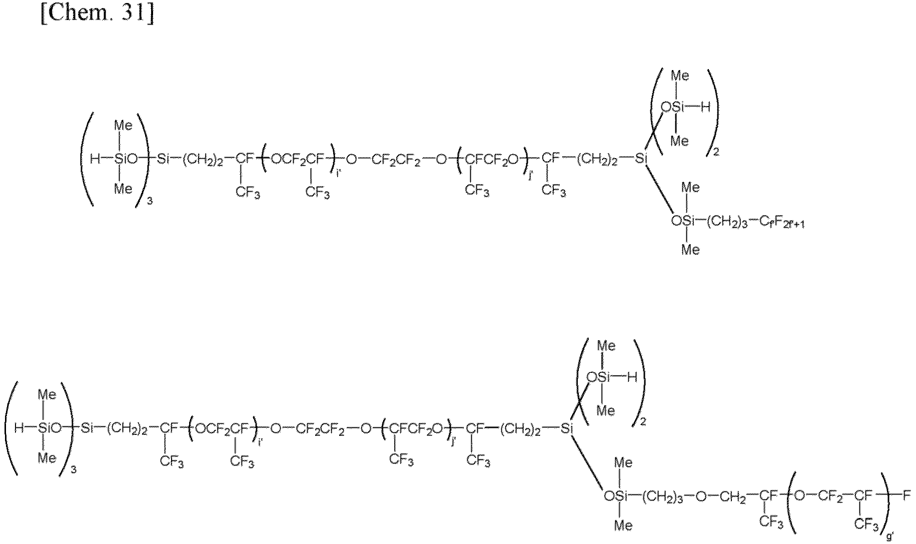 wherein f' is an integer of 1 to 10, g' is an integer of 1 to 50, i' and j' are each an integer of 1 to 100, and i' + j' is an integer of 2 to 200. 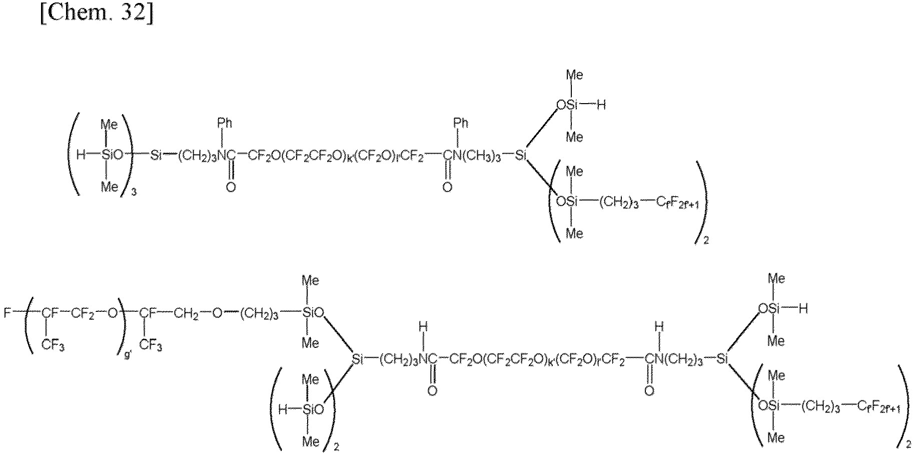 wherein f' is an integer of 1 to 10, g' is an integer of 1 to 50, k' and l' are each an integer of 1 to 50, and k' + l' is an integer of 2 to 100, and the repeating units shown in parentheses appended with k' and l' may be randomly arranged.

One kind of the component (B) may be used alone or two or more kinds thereof may be used in combination. In addition, the compounding amount of the component (B) is an amount (molar ratio) such that the amount of hydrogen atoms directly bonded to silicon atoms (SiH groups) in the component (B) is 0.5 to 3 mol, preferably 0.6 to 2 mol, based on 1 mol of alkenyl groups contained in the composition of the present invention. If the amount of the SiH group is less than 0.5 mol, the degree of crosslinking becomes insufficient, and on the other hand, if the amount is more than 3 mol, the storage stability is impaired, or the heat resistance of the cured product obtained after curing is deteriorated.

### [Component (C)]

The component (C) is sodium fluoride, and has a function of improving the rubber strength of the cured product obtained by curing the adhesive agent composition of the present invention without significantly impairing the light transmittance (transparency).

As sodium fluoride, a commercially available product can be used. Examples of the commercially available product of sodium fluoride include "sodium fluoride" available from STELLA CHEMIFA CORPORATION, and the like.

The compounding amount (C) of the component is 0.1 to 120 parts by weight, preferably 1 to 100 parts by weight, and more preferably 20 to 80 parts by weight, per 100 parts by weight of the component (A). If the content is less than 0.1 parts by weight, the rubber strength cannot be sufficiently improved, and on the other hand, if the content is more than 120 parts by weight, the fluidity of the composition of the present invention and the transparency of the cured product may be impaired.

### [Component (D)]

The platinum group metal-based catalyst as the component (D) is a hydrosilylation reaction catalyst. The hydrosilylation reaction catalyst is a catalyst that promotes an addition reaction between an alkenyl group contained in the composition, particularly an alkenyl group in the component (A) and SiH groups contained in the composition, particularly SiH groups in the components (B) and (E). This hydrosilylation reaction catalyst is generally a noble metal or a compound thereof, and platinum or a platinum compound which is relatively easily available is often used because of its high price.

Examples of the platinum compound include chloroplatinic acid, a complex of chloroplatinic acid and an olefin such as ethylene, a complex of platinum and alcohol or vinylsiloxane, and metallic platinum supported on silica, alumina, carbon, and the like. As platinum or platinum group metal-based catalysts other than platinum compounds, rhodium, ruthenium, iridium, and palladium-based compounds are also known, and examples thereof include RhCl(PPh₃)₃, RhCl(CO)(PPh₃)₂, Ru₃(CO)₁₂, IrCl(CO)(PPh₃)₂, Pd(PPh₃)₄, and the like. In the formula, Ph is a phenyl group.

In the use of these catalysts, a catalyst can be used in a solid state when the catalyst is a solid catalyst, but in order to obtain a more uniform cured product, for example, it is preferable to use a catalyst obtained by dissolving chloroplatinic acid or a complex in an appropriate solvent such as toluene or ethanol, and compatibilizing the solution with the linear polyfluoro compound as the component (A).

The compounding amount of the component (D) is an effective amount as a hydrosilylation reaction catalyst, and is usually 0.1 to 2,000 ppm, preferably 0.1 to 500 ppm, and particularly preferably 0.5 to 200 ppm (in terms of the weight of platinum group metal atoms) with respect to the weight of the component (A), but can be appropriately increased or decreased according to a desired curing rate.

### [Component (E)]

The component (E) is an organopolysiloxane having, in one molecule, a hydrogen atom directly bonded to a silicon atom (SiH group), a monovalent perfluoroalkyl group or a monovalent perfluorooxyalkyl group, and an epoxy group or a trialkoxysilyl group bonded to a silicon atom via a divalent hydrocarbon group which may contain an oxygen atom, or both groups, and has a function as an adhesion-imparting agent that imparts self-adhesive property to the cured product obtained by curing the composition of the present invention.

The structure of organopolysiloxane as the component (E) may be any of cyclic, chain, three-dimensional network, and a combination thereof, but is preferably a cyclic structure. The number of silicon atoms in the organopolysiloxane is not particularly limited, but is usually about 2 to 60, preferably about 3 to 30, and more preferably about 4 to 30.

Moreover, the component (E) has one or more SiH groups in one molecule, and the content of the SiH groups is preferably 0.00001 to 0.02 mol/g, more preferably 0.0001 to 0.01 mol/g.

The monovalent perfluoroalkyl group or the monovalent perfluorooxyalkyl group is a group introduced from the viewpoint of compatibility with the component (A), dispersibility, uniformity after curing, and the like. Examples of the monovalent perfluoroalkyl group or monovalent perfluorooxyalkyl group include groups having the general formula (4) or (5) described above.

In addition, the monovalent perfluoroalkyl group or the monovalent perfluorooxyalkyl group is preferably connected to a silicon atom constituting polysiloxane via a divalent hydrocarbon group (linking group) which may contain a silicon atom, an oxygen atom and a nitrogen atom, and as the divalent hydrocarbon group, an alkylene group, an arylene group and a combination thereof, or a group in which one or more kinds of structures selected from the group consisting of an ether-bonding oxygen atom, an amide bond, a carbonyl bond, an ester bond, and diorganosilylene groups such as a dimethylsilylene group are intervened in these groups or the like, and examples thereof include those having 2 to 20 carbon atoms such as

-CH₂CH₂- ,

-CH₂CH₂CH₂- ,

-CH₂CH₂CH₂OCH₂- ,

-CH₂CH₂CH₂-NH-CO- ,

-CH₂CH₂CH₂-N(Ph)-CO- ,

-CH₂CH₂CH₂-N(CH₃)-CO- ,

-CH₂CH₂CH₂-N(CH₂CH₃)-CO- ,

-CH₂CH₂CH₂-N(CH(CH₃)₂)-CO- ,

-CH₂CH₂CH₂-O-CO- ,

-CH₂CH₂CH₂-Si(CH₃)₂-O-Si(CH₃)₂-CH₂CH₂CH₂- ,

-CH₂OCH₂CH₂CH₂-Si(CH₃)₂-O-Si(CH₃)₂-CH₂CH₂-,

-CO-N(CH₃)-Ph'-Si(CH₃)₂-CH₂CH₂- ,

-CO-N(CH₃)-Ph'-Si(CH₃)₂-CH₂CH₂-Si(CH₃)₂-O-Si(CH₃)₂-CH₂CH₂- ,

-CO-NH-Ph'-[Si(CH₃)₂-CH₂CH₂]₃-CH₂- ,

and

-CO-N(CH₃)-Ph'-[Si(CH₃)₂-CH₂CH₂]₃-

provided that Ph is a phenyl group and Ph' is a phenylene group.
In the above structure, it is preferred that the left bond hand is bonded to the silicon atom constituting polysiloxane, and the right bond hand is bonded to the monovalent perfluoroalkyl group or the monovalent perfluorooxyalkyl group.

Examples of the epoxy group bonded to a silicon atom via a divalent hydrocarbon group which may contain an oxygen atom include alicyclic epoxy groups such as an epoxy group having the following general formula (17) and an epoxy cyclohexyl group having the following general formula (18): 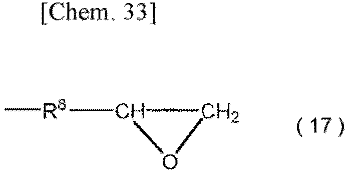 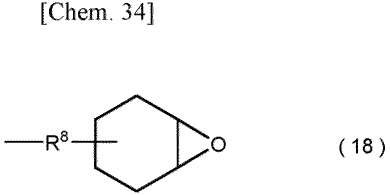 wherein R⁸ is a divalent hydrocarbon group which may contain an oxygen atom.

In the general formulas (17) and (18), R⁸ is a divalent hydrocarbon group which may have an oxygen atom intervened therebetween, having preferably 1 to 10 carbon atoms, more preferably 1 to 5 carbon atoms, and specific examples thereof include alkylene groups such as a methylene group, an ethylene group, a propylene group, a butylene group, a hexylene group and an octylene group, cycloalkylene groups such as a cyclohexylene group, and oxyalkylene groups such as an oxyethylene group, an oxypropylene group and an oxybutylene group, or the following groups in which a structure such as an ether-bonding oxygen atom or an ester bond is intervened in these groups, and the like.

-CH₂CH₂CH₂OCH₂- ,

-CH₂CH₂CH₂-O-CO-

Specific examples of the epoxy group via such a divalent hydrocarbon group which may contain an oxygen atom include those shown below:

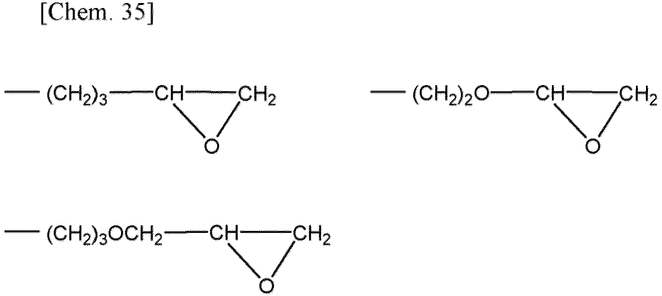

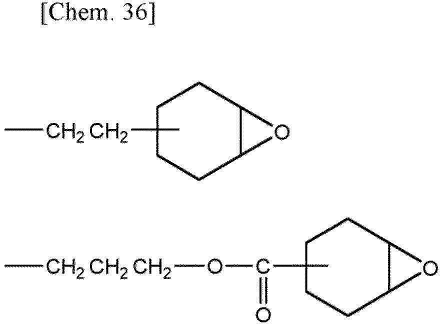

On the other hand, examples of the trialkoxysilyl group bonded to a silicon atom via a divalent hydrocarbon group which may contain an oxygen atom include those having the following general formula (19):

-R⁹-Si(OR¹⁰)₃ (19)

wherein R⁹ is a divalent hydrocarbon group which may contain an oxygen atom, and R¹⁰ is an alkyl group.

In the general formula (19), R⁹ is preferably a divalent hydrocarbon group having 1 to 10 carbon atoms, more preferably 1 to 5 carbon atoms, and specific examples thereof include alkylene groups such as a methylene group, an ethylene group, a propylene group, a butylene group, a hexylene group, a cyclohexylene group, and an octylene group, and the like. In addition, R¹⁰ is preferably an alkyl group having 1 to 8 carbon atoms, more preferably 1 to 4 carbon atoms, and specific examples thereof include a methyl group, an ethyl group, an n-propyl group, and the like.

Specific examples of such a trialkoxysilyl group via a divalent hydrocarbon group which may contain an oxygen atom include those shown below:

-(CH₂)₂-Si(OCH₃)₃ ,

-(CH₂)₃-Si(OCH₃)₃ ,

-(CH₂)₂-Si(OCH₂CH₃)₃ ,

-(CH₂)₃-Si(OCH₂CH₃)₃ .

Further, in the organopolysiloxane as the component (E), a monovalent substituent bonded to a silicon atom other than the hydrogen atom directly bonded to a silicon atom (SiH group), a monovalent perfluoroalkyl group or a monovalent perfluorooxyalkyl group, and an epoxy group or a trialkoxysilyl group bonded to a silicon atom via a divalent hydrocarbon group which may contain an oxygen atom are an unsubstituted or substituted alkyl group having 1 to 20, preferably 1 to 12 carbon atoms or an aryl group having 6 to 20, preferably 6 to 12 carbon atoms, and examples thereof include alkyl groups such as a methyl group, an ethyl group, a propyl group, a butyl group, a hexyl group, a cyclohexyl group, an octyl group, and a decyl group; aryl groups such as a phenyl group, a tolyl group, and a naphthyl group, and for example, a chloromethyl group, a chloropropyl group, and a cyanoethyl group in which some or all of hydrogen atoms of these groups are substituted with a halogen atom such as a chlorine atom, a cyano group, and the like. Among them, a methyl group and an ethyl group are preferred.

The organopolysiloxane as the component (E) is preferably a cyclic organopolysiloxane having the following general formula (16): 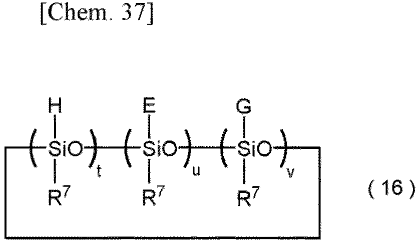 wherein t is an integer of 1 to 6, preferably an integer of 1 to 5, more preferably 1 or 2, u is an integer of 1 to 4, preferably an integer of 1 to 3, v is an integer of 1 to 4, preferably an integer of 1 to 3, and t + u + v is an integer of 4 to 10, preferably an integer of 4 to 8, R⁷ is each independently an unsubstituted or substituted alkyl group having 1 to 20, preferably 1 to 12 carbon atoms or an aryl group having 6 to 20, preferably 6 to 12 carbon atoms, E is each independently a monovalent perfluoroalkyl group or a monovalent perfluorooxyalkyl group bonded to a silicon atom via a divalent hydrocarbon group which may contain a silicon atom, an oxygen atom and a nitrogen atom, and G is each independently an epoxy group or a trialkoxysilyl group bonded to a silicon atom via a divalent hydrocarbon group which may contain an oxygen atom, provided that the order of bonding of -(SiO)(H)R⁷-, -(SiO)(E)R⁷-, and -(SiO)(G)R⁷- is not limited.

In the general formula (16), R⁷ is each independently an unsubstituted or substituted alkyl group having 1 to 20, preferably 1 to 12 carbon atoms, or an aryl group having 6 to 20, preferably 6 to 12 carbon atoms, and examples thereof include the hydrogen atom directly bonded to a silicon atom (SiH group), a monovalent perfluoroalkyl group or a monovalent perfluorooxyalkyl group, and the same groups as the groups exemplified as the monovalent substituent bonded to a silicon atom other than an epoxy group or a trialkoxysilyl group bonded to a silicon atom via a divalent hydrocarbon group which may contain an oxygen atom, and a methyl group and an ethyl group are preferred.

In addition, E is each independently a monovalent perfluoroalkyl group or a monovalent perfluorooxyalkyl group bonded to a silicon atom via a divalent hydrocarbon group which may contain a silicon atom, an oxygen atom and a nitrogen atom, and examples of the monovalent perfluoroalkyl group or the monovalent perfluorooxyalkyl group include the groups having the general formula (4) or (5) described above, and examples of the divalent hydrocarbon group which may contain a silicon atom, an oxygen atom and a nitrogen atom include those exemplified as an alkylene group, an arylene group and a combination thereof, or a group in which one or more kinds of structures selected from the group consisting of an ether-bonding oxygen atom, an amide bond, a carbonyl bond, an ester bond, and diorganosilylene groups such as a dimethylsilylene group described above.

In addition, G is each independently an epoxy group or a trialkoxysilyl group bonded to a silicon atom via a divalent hydrocarbon group which may contain an oxygen atom, and examples thereof include groups having the formulas (17) to (19) described above.

Examples of the component (E) include the following compounds. In the following formulas, Me represents a methyl group, and Et represents an ethyl group. In addition, each siloxane unit may be randomly arranged. 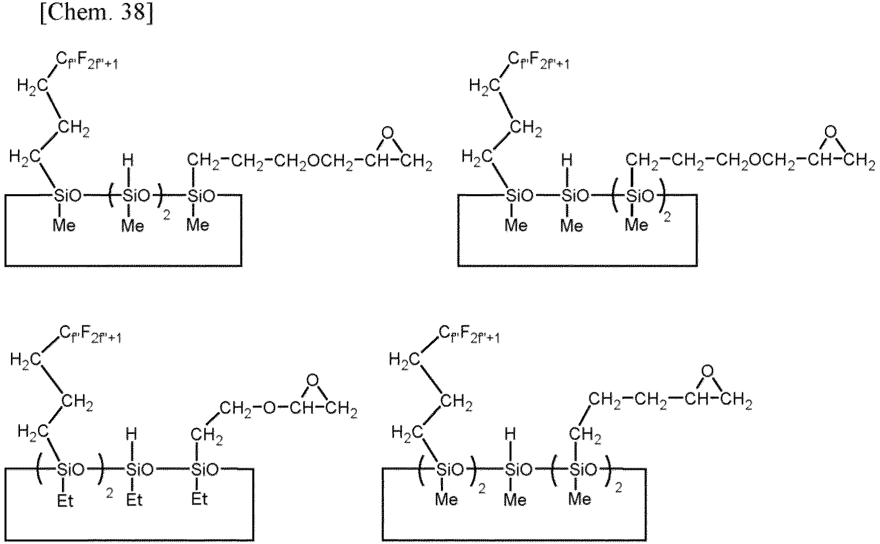 wherein f" is an integer of 1 to 10. 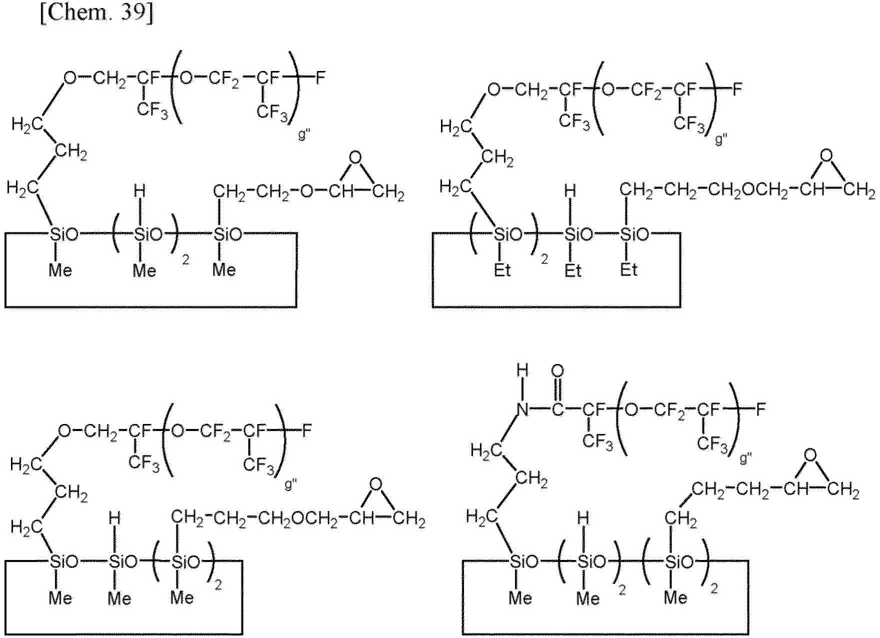 wherein g" is an integer of 1 to 50. 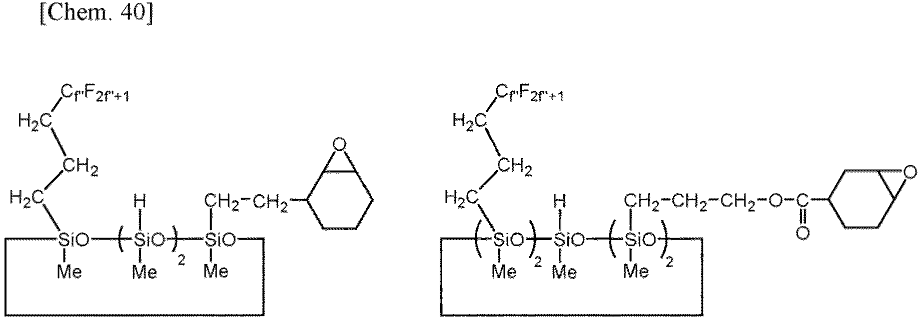 wherein f" is an integer of 1 to 10. 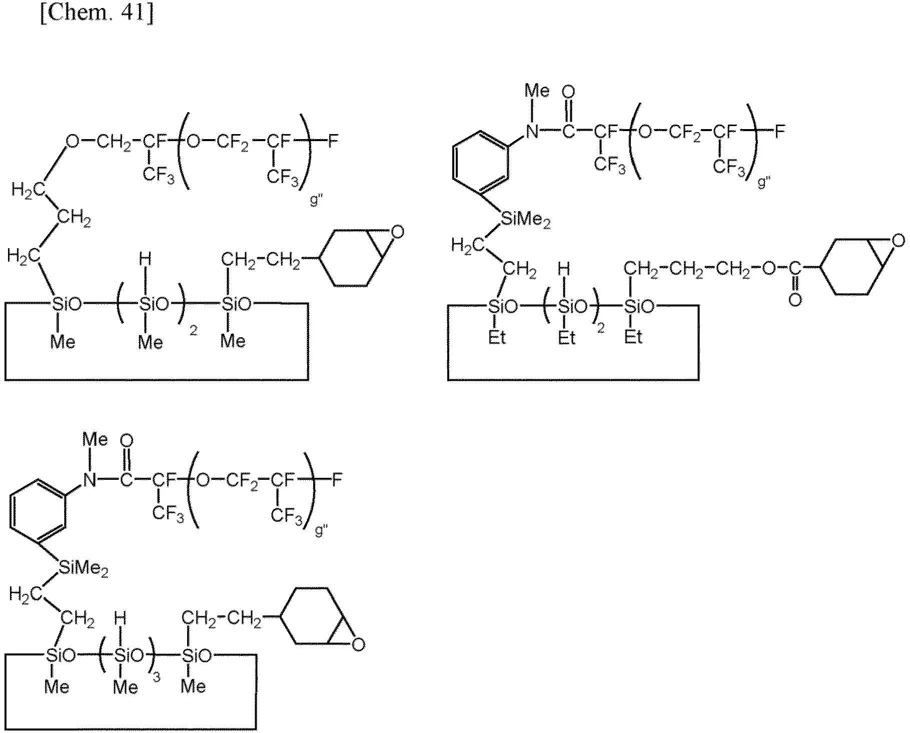 wherein g" is an integer of 1 to 50. 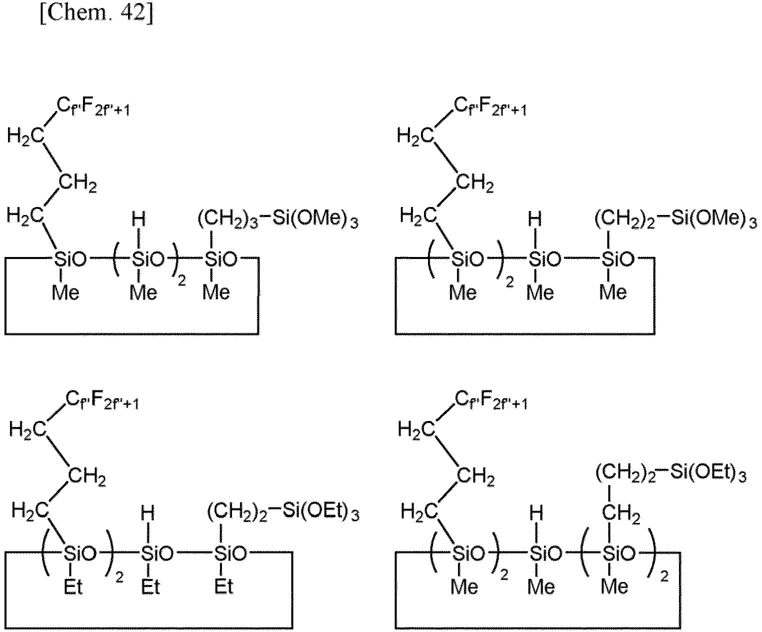 wherein f" is an integer of 1 to 10. 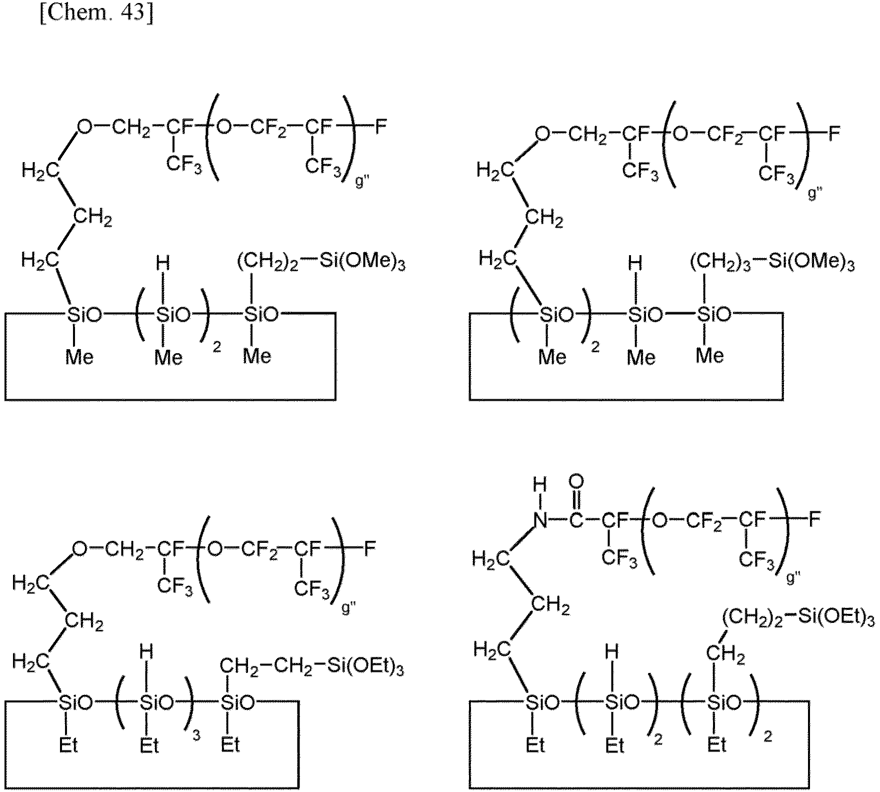 wherein g" is an integer of 1 to 50. 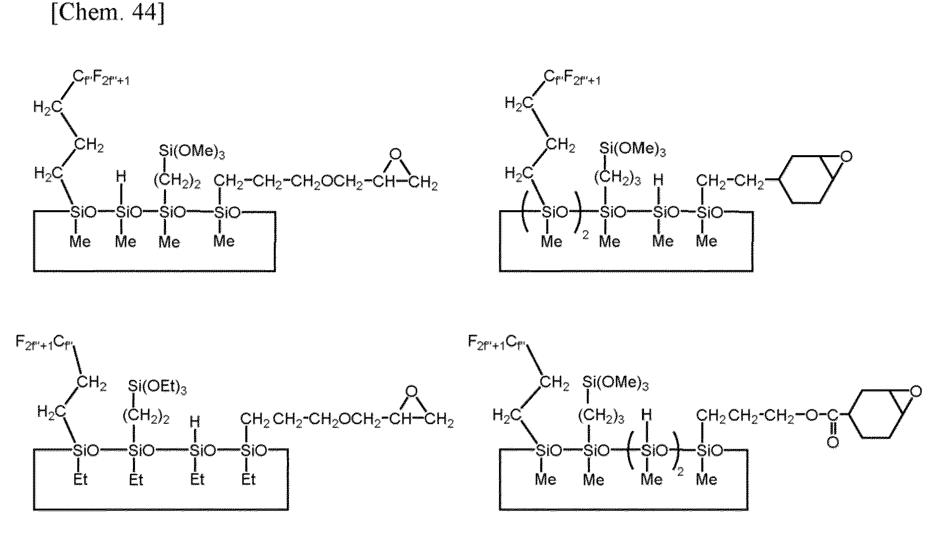 wherein f" is an integer of 1 to 10. 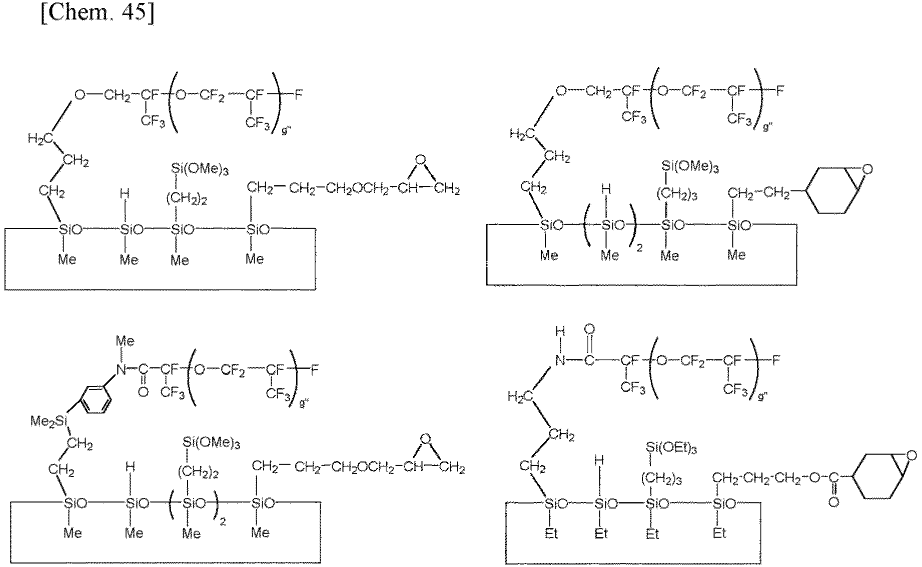 wherein g" is an integer of 1 to 50.

One kind of the component (E) may be used alone or two or more kinds thereof may be used in combination. In addition, the use amount of the component (E) is in a range of 0.1 to 20 parts by weight, preferably in a range of 0.1 to 10 parts by weight, and more preferably in a range of 0.5 to 8 parts by weight, per 100 parts by weight of the component (A). In the case of less than 0.1 parts by weight, sufficient adhesive property cannot be obtained, and if the content exceeds 20 parts by weight, the physical strength of the cured product obtained by curing the composition of the present invention is deteriorated.

In the present invention, it is preferable that the component (E) is an amount (molar ratio) such that the total of hydrogen atoms directly bonded to silicon atoms (SiH groups) contained in the composition of the present invention (for example, the total of SiH groups contained in the component (B) and the component (E)) is 0.51 to 3.5 mol, particularly 0.6 to 2.5 mol, per 1 mol of the total of alkenyl groups contained in the composition of the present invention (for example, the total of alkenyl groups contained in the component (A) and the optional component described later).

### [Other components]

To the curable fluoropolyether adhesive agent composition of the present invention, in addition to the components (A) to (E), a hydrosilylation addition reaction controlling agent (component (F)), an inorganic filler, a plasticizer, a viscosity modifier, and a flexibility imparting agent as optional components can be added, in order to enhance its practicability. Further, various compounding agents such as an adhesion promoter such as carboxylic acid anhydride can be added as necessary, for the purpose of improving the adhesion imparting ability of the component (E) and promoting expression of self-adhesive property of the cured product obtained by curing the composition of the present invention. The compounding amount of these additives is arbitrary as long as the object of the present invention is not impaired.

Examples of the hydrosilylation addition reaction controlling agent (component (F)) include acetylenic alcohols such as 1-ethynyl-1-hydroxycyclohexane, 3-methyl-1-butin-3-ol, 3,5-dimethyl-1-hexin-3-ol, 3-methyl-1-penten-3-ol, and phenylbutinol; reaction products of chlorosilane having a monovalent perfluoroalkyl group having the general formula (4) or a monovalent perfluorooxyalkyl group having the general formula (5) and an acetylenic alcohol; 3-methyl-3-penten-1-yne, 3,5-dimethyl-3-hexen-1-yne; triallyl isocyanurate; polyvinyl siloxane; organophosphorus compounds; and the like, and the addition thereof can appropriately maintain curing reactivity and storage stability.

Examples of the inorganic filler include silica powders such as fumed silica (fumed silica or dry silica), precipitated silica (wet silica), spherical silica (fused silica), sol-gel method silica, and silica aerogel, or silica powders obtained by treating the surface of the silica powders with various organochlorosilanes, organodisilazanes, cyclic organopolysilazanes, or the like, silica based reinforcing fillers such as silica powders obtained by further retreating the surface-treated silica powders with organosilanes or organosiloxanes having a monovalent perfluoroalkyl group having the above general formula (4) or a monovalent perfluorooxyalkyl group having the above general formula (5), reinforcing or quasi-reinforcing fillers such as quartz powders, fused quartz powders, diatomaceous earth, and calcium carbonate, inorganic pigments such as titanium oxide, iron oxide, carbon black, and cobalt aluminate, heat resistance improvers such as titanium oxide, iron oxide, carbon black, cerium oxide, cerium hydroxide, zinc carbonate, magnesium carbonate, and manganese carbonate, thermal conductivity imparting agents such as alumina, boron nitride, silicon carbide, and metal powder, conductivity imparting agents such as carbon black, silver powder, and conductive zinc flower, and the like.

As the plasticizer, viscosity modifier, and flexibility imparting agent, a linear polyfluoro compound having the following general formula (20) or (21) and/or a polyfluoro monoalkenyl compound having the following general formula (22) can be used.

F-(CF₂CF₂CF₂O)_{w}-J (20)

wherein J is a group of CₓF₂ₓ₊₁- (x is an integer of 1 to 3), and w is an integer of 1 to 500, preferably an integer of 2 to 300.

J- {(OCF(CF₃)CF₂)_{y}-(OCF₂CF₂)_{z}-(OCF₂)_{α}}-O-J (21)

wherein J is the same as described above, and y and z are each an integer of 0 to 300, preferably an integer of 0 to 150, provided that a case where both y and z are 0 is excluded, α is an integer of 1 to 300, preferably an integer of 1 to 150, and the repeating units may be randomly arranged.

Rf-(L)_{β}-CH=CH₂ (22)

wherein Rf is a group having the following general formula (23):

   F-[CF(CF₃)CF₂O]_{γ}-C_{δ}F_{2δ}- (23)
wherein γ is an integer of 1 to 200, preferably an integer of 1 to 150, and δ is an integer of 1 to 3,
L is -CH₂-, -OCH₂-, -CH₂OCH₂- or -CO-NR¹¹-M-, in each of these groups, the left end is bonded to Rf and the right end is bonded to a carbon atom, R¹¹ is a hydrogen atom, a methyl group, a phenyl group or an allyl group, and M is -CH₂-, a group having the following structural formula (24) or a group having the following structural formula (25): 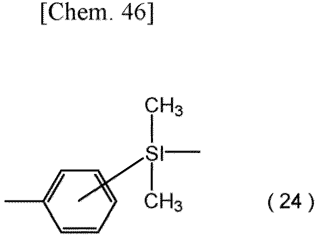 a dimethylphenylsilylene group shown by an ortho position, a meta position or a para position, and the left end is bonded to a nitrogen atom and the right end is bonded to a carbon atom, 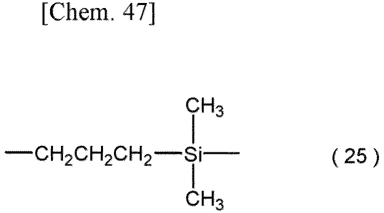
the left end is bonded to a nitrogen atom and the right end to a carbon atom,
and β is 0 or 1.

Specific examples of the linear polyfluoro compound having the general formula (20) or (21) include the following:

F-(CF₂CF₂CF₂O)_{w'}-CF₂CF₃

w' is an integer of 1 to 200,

   CF₃-{(OCF(CF₃)CF₂)_{y'}-(OCF₂)_{α'}}-O-CF₃
y' is an integer of 1 to 200, α' is an integer of 1 to 200, and the repeating units may be randomly arranged.

   CF₃-{(OCF₂CF₂)_{z'}-(OCF₂)_{α'}}-O-CF₃
z' is an integer of 1 to 200, α' is an integer of 1 to 200, and the repeating units may be randomly arranged,

One kind of the linear polyfluoro compound having the general formula (20) or (21) may be used alone or two or more kinds thereof may be used in combination.

Specific examples of the polyfluoromonoalkenyl compound having the general formula (22) include the following compounds: 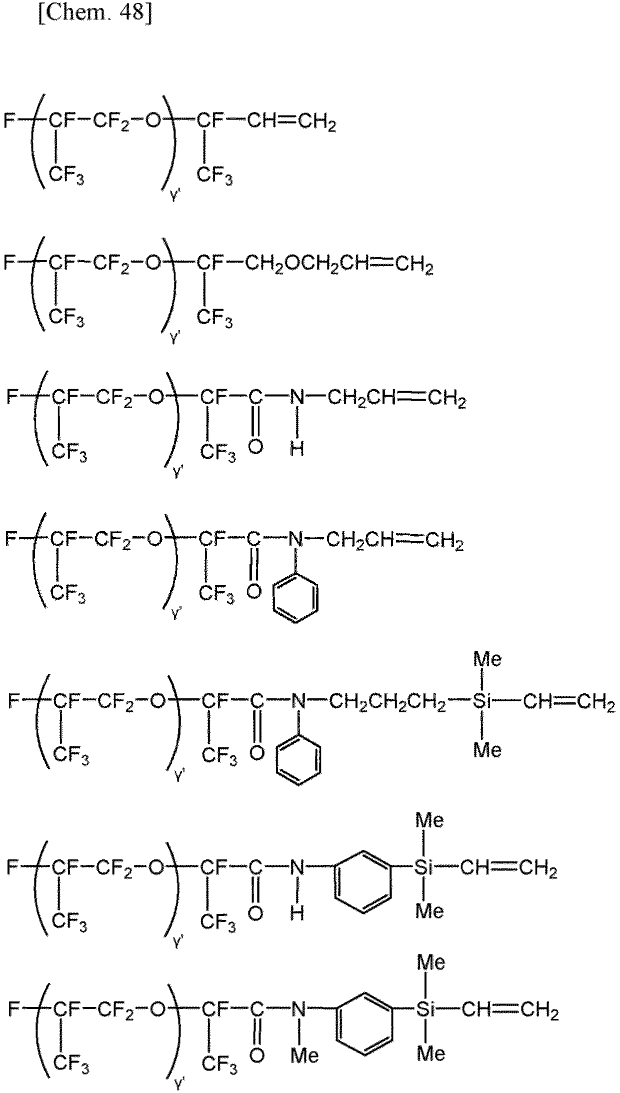 wherein γ' is an integer of 1 to 200.

One kind of the polyfluoromonoalkenyl compound having the general formula (22) may be used alone or two or more kinds thereof may be used in combination.

### <Method for producing curable fluoropolyether adhesive agent composition>

The method for producing the adhesive agent composition of the present invention is not particularly limited, and the adhesive agent composition can be produced by kneading the components (A) to (E), the component (F) as an optional component, and other optional components. In the present invention, the component (A) and the component (C) are preferably mixed in advance. At this time, a mixing device such as a planetary mixer, a loss mixer or a Hobart mixer, or a kneading device such as a kneader or a three-roll mill can be used, as necessary.

Regarding the configuration of the adhesive agent composition of the present invention, the components (A) to (E), the component (F) as an optional component, and all other optional components may be handled as one composition, that is, may be configured as a so-called one-component type, or may be configured as a two-component type and both may be mixed at the time of use.

When the adhesive agent composition of the present invention is used, the composition may be dissolved at a desired concentration in an appropriate fluorine-based solvent, for example, 1,3-bis(trifluoromethyl)benzene, Fluorinert (manufactured by 3M), perfluorobutyl methyl ether, perfluorobutyl ethyl ether or the like depending on the use and purpose of the adhesive agent composition, and used. In particular, it is preferable to use a solvent in thin film coating applications.

### <Method for curing curable fluoropolyether adhesive agent composition>

The total light transmittance of a cured product having a thickness of 2 mm obtained by curing the adhesive agent composition of the present invention is preferably 80% or more (80 to 100%), and more preferably 85 to 100%. In the case of a total light transmittance of less than 80%, a defect of an optical function may occur if the cured product is used for the optical component. The total light transmittance is measured according to JIS K7361-1. The total light transmittance of 80% or more can be achieved by setting the compounding amount of sodium fluoride as the component (C) per 100 parts by weight of the alkenyl group-containing linear polyfluoro compound as the component (A) in an adhesive agent composition having a specific composition containing the components (A) to (E) of the present invention to be within a specific range (that is, 0.1 to 120 parts by weight, preferably 1 to 100 parts by weight, and more preferably 20 to 80 parts by weight) defined in the present invention.

The adhesive agent composition of the present invention can be easily cured by being left at normal temperature or by being heated. In this case, it is preferable to perform thermal curing usually within a range of room temperature (for example, 5 to 35°C) to 200°C, and 1 minute to 24 hours.

### <Optical component>

A cured product obtained by curing the adhesive agent composition of the present invention (fluoropolyether rubber elastic body) is excellent in heat resistance, oil resistance, chemical resistance, solvent resistance, low temperature characteristics, low moisture permeability and the like, further has good light transmittance and good adhesive property to various substrates, and is excellent in rubber strength, and thus is particularly suitable as an adhesive material used for an optical component. Specific examples thereof include optical materials used for display substrates such as light guide plates, backlights, liquid crystal display elements, color filters and EL display element substrates, surface protective films, light diffusion films, retardation films, transparent conductive films, antireflection films, OHP films, optical disks, optical fibers, lenses, and the like, sealing materials for protecting electrical and electronic components such as optical semiconductor elements such as rectifying diodes, light emitting diodes, LSIs, and organic ELs, surface layer materials of fixing members in an image forming apparatus equipped with a light reflection sensor, and the like.

The adhesive agent composition of the present invention particularly has good adhesive property to various substrates such as metals such as aluminum, plastics such as epoxy glass resins (organic resins), and inorganic substances such as glass.

### EXAMPLES

Hereinafter, the present invention is described specifically with reference to Examples and Comparative Examples, but the present invention is not limited to the following Examples. In the following Examples, parts represent parts by weight, and Me represents a methyl group. The polymerization degree of the component (A) is a numerical average polymerization degree calculated from ¹⁹F-NMR, and the viscosity of the component (A) shows a measured value at 23°C (in accordance with JIS K6249).

### [Examples 1 to 4, Comparative Examples 1 to 4]

The components (A) to (F) used in the following Examples and Comparative Examples are shown below. The vinyl group content of the component (A) has been calculated from ¹H-NMR using an internal standard substance.

### Component (A)

### (A-1): Linear polyfluoro compound having the following formula (26) (viscosity: 4,010 mPa·s, vinyl group content: 0.0301 mol/100 g)

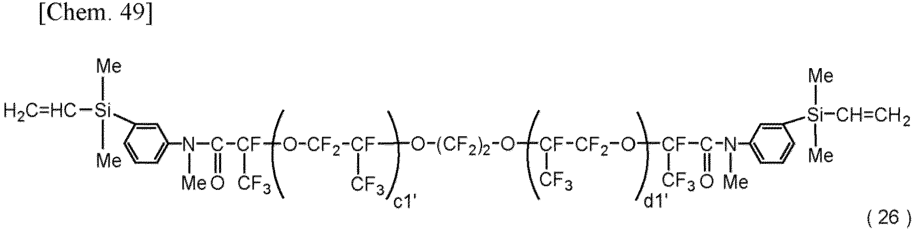

provided that c1' and d1' are integers of 1 or more, and the average value of c1' + d1' is 35.

### (A-2): Linear polyfluoro compound having the following formula (27) (viscosity: 11,000 mPa·s, vinyl group content: 0.0119 mol/100 g)

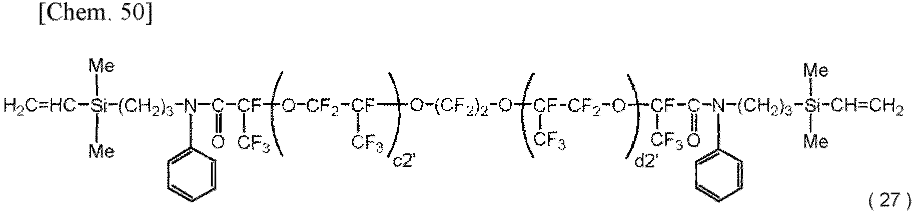

provided that c2' and d2' are integers of 1 or more, and the average value of c2' + d2' is 90.

### Component (B)

### (B-1): Fluorine-containing organohydrogensiloxane having the following formula (28) (SiH group content: 0.00394 mol/g)

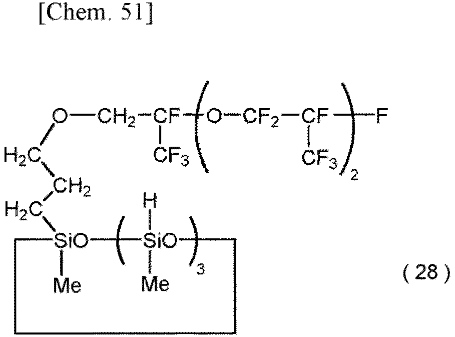

### (B-2): Fluorine-containing organohydrogensiloxane having the following formula (29) (SiH group content: 0.000967 mol/g)

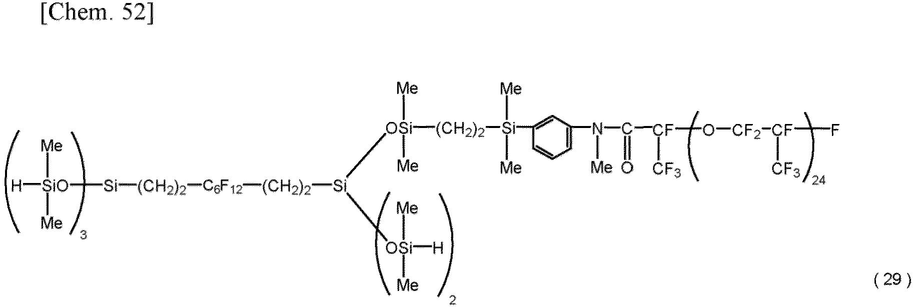

### Component (C)

### (C-1): Sodium fluoride manufactured by STELLA CHEMIFA CORPORATION

### Component (D)

### (D-1): Toluene solution of platinum-divinyltetramethyldisiloxane complex (platinum concentration: 0.5 wt%)

### Component (E)

### (E-1): Organopolysiloxane having the following formula (30) (SiH group content: 0.00101 mol/g)

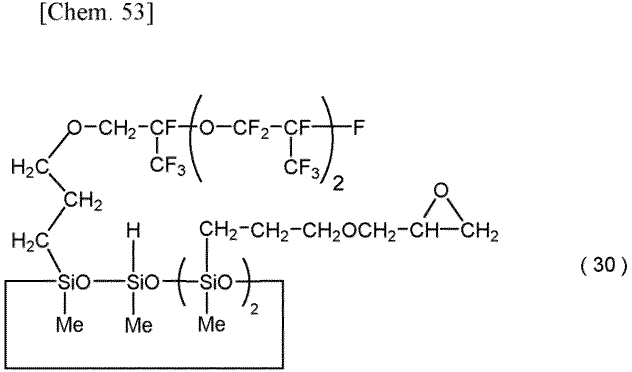

### (E-2): Organopolysiloxane having the following formula (31) (SiH group content: 0.00226 mol/g)

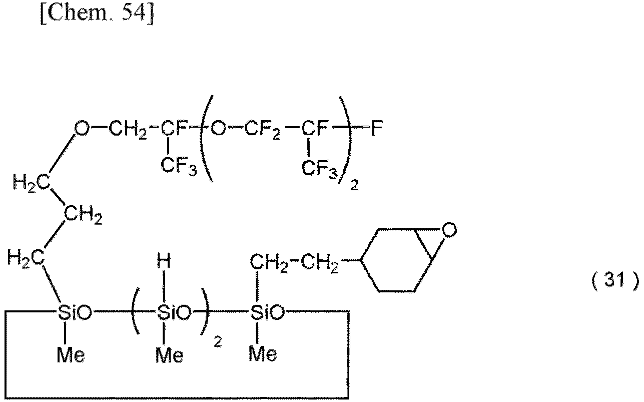

### (E-3): Organopolysiloxane having the following formula (32) (SiH group content: 0.00116 mol/g)

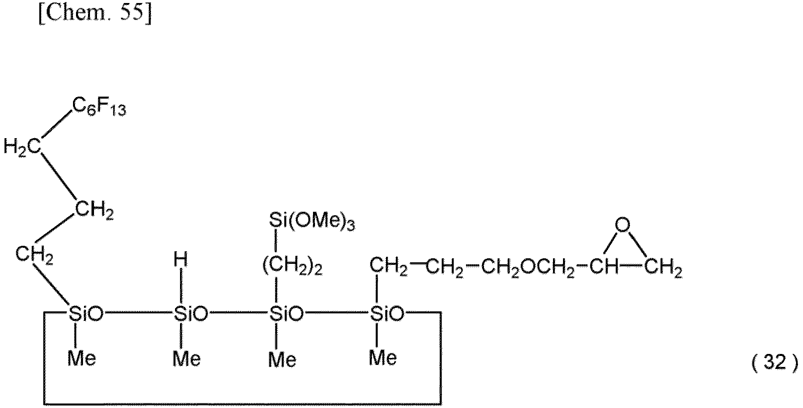

### Component (F)

### (F-1): 50 wt% Toluene solution of 1-ethynyl-1-hydroxycyclohexane

In Examples 1 to 4 and Comparative Examples 1 to 4, compositions were prepared as follows using predetermined amounts of the components shown in Table 1. In addition, the compositions were molded and cured according to the following method to prepare cured products, and the rubber physical properties and total light transmittance of the cured products were measured. The results are shown in Table 1.

### Preparation of compositions of Examples 1 to 4:

First, the component (A) and the component (C) were kneaded in predetermined amounts shown in Table 1 at room temperature for 1 hour using a planetary mixer, and further kneaded at 150°C for 1 hour under reduced pressure of -98.0 kPaG. Next, the kneaded product was cooled to room temperature, and then subjected to a three-roll mill treatment. A predetermined amount of the component (D) shown in Table 1 was added to the kneaded product, and the mixture was kneaded at room temperature for 10 minutes. Thereafter, a predetermined amount of the component (F) shown in Table 1 was added thereto, and the mixture was kneaded at room temperature for 10 minutes. Finally, predetermined amounts of the component (B) and the component (E) shown in Table 1 were added thereto, and the mixture was kneaded at room temperature for 10 minutes to obtain compositions.

### Preparation of compositions of Comparative Examples 1 to 3:

First, the component (A) and the component (D) were kneaded in predetermined amounts shown in Table 1 at room temperature for 10 minutes using a planetary mixer. Next, predetermined amounts of the component (F) shown in Table 1 were added to the kneaded product, and the mixture was kneaded at room temperature for 10 minutes. Then, finally, predetermined amounts of the components (B) and (E) shown in Table 1 were added thereto, and the mixture was kneaded at room temperature for 10 minutes to obtain compositions.

### Preparation of composition of Comparative Example 4:

First, the component (A) and spherical silica particles ("ADMAFINE SO-32R/75 C" manufactured by Admatechs Co., Ltd., mean particle size: 1.6 µm) were kneaded in predetermined amounts shown in Table 1 at room temperature for 1 hour using a planetary mixer, and further kneaded at 150°C for 1 hour under reduced pressure of -98.0 kPaG. Next, the kneaded product was cooled to room temperature, and then subjected to a three-roll mill treatment. A predetermined amount of the component (D) shown in Table 1 was added to the kneaded product, and the mixture was kneaded at room temperature for 10 minutes. Thereafter, a predetermined amount of the component (F) shown in Table 1 was added thereto, and the mixture was kneaded at room temperature for 10 minutes. Finally, predetermined amounts of the component (B) and the component (E) shown in Table 1 were added thereto, and the mixture was kneaded at room temperature for 10 minutes to obtain compositions.

### Preparation of cured products of Examples 1 to 4 and Comparative Examples 1 to 4:

The compositions were subjected to press crosslinking (primary crosslinking) at 150°C for 10 minutes and oven crosslinking (secondary crosslinking) at 150°C for 50 minutes to prepare cured sheets (85 mm × 105 mm × 2 mm).

### Rubber physical properties of cured products of Examples 1 to 4 and Comparative Examples 1 to 4:

Using the cured sheets, hardness was measured in accordance with JIS K6253-3, and tensile strength and elongation at break were measured in accordance with JIS K6251. The results are shown in Table 1.

### Total light transmittance of cured products of Examples 1 to 4 and Comparative Examples 1 to 4:

Using the cured sheets, total light transmittance was measured according to JIS K7361-1 using a haze meter HGM-2 (manufactured by Suga Test Instruments Co., Ltd.). The results are shown in Table 1.

### Tensile shear adhesive strength of Examples 1 to 4 and Comparative Examples 1 to 4:

Two test panels of 100 mm × 25 mm of various adherends (aluminum, epoxy glass resin, and glass) were superposed with a layer of the composition of each of Examples and Comparative Examples (length 10 mm × width 25 mm × thickness 1 mm) having a thickness of 1 mm sandwiched therebetween such that the respective ends overlapped each other by 10 mm, and the compositions were cured by heating at 150°C for 1 hour to prepare adhesion test pieces. Next, the test pieces were subjected to a tensile shear adhesion test (tension rate: 50 mm/min) to evaluate the adhesion strength (shear adhesion) and the cohesive failure rate. The results are shown in Table 2.

**[Table 1]**

| Component (parts by weight) | | Example | | | | Comparative Example | | | |
|---|---|---|---|---|---|---|---|---|---|
| | | 1 | 2 | 3 | 4 | 1 | 2 | 3 | 4 |
| (A) | (A-1) | 100 | - | 100 | 100 | 100 | - | 100 | - |
| | (A-2) | - | 100 | - | - | - | 100 | - | 100 |
| (B) | (B-1) | 8.40 | - | - | - | 8.40 | - | - | - |
| | (B-2) | - | 13.5 | 37.4 | 37.4 | - | 13.5 | 37.4 | 13.5 |
| (C) | (C-1) | 25 | 50 | 75 | 100 | - | - | - | - |
| (D) | (D-1) | 0.20 | 0.20 | 0.20 | 0.20 | 0.20 | 0.20 | 0.20 | 0.20 |
| (E) | (E-1) | 1.80 | - | 2.20 | 1.50 | 1.80 | - | 1.50 | - |
| | (E-2) | - | 2.00 | - | - | - | 2.00 | - | 2.00 |
| | (E-3) | - | - | - | 0.50 | - | - | 0.50 | - |
| (F) | (F-1) | 0.20 | 0.20 | 0.20 | 0.20 | 0.20 | 0.20 | 0.20 | 0.20 |
| Spherical silica particles | | - | - | - | - | - | - | - | 30 |
| SiH group of component (B) / vinyl group of component (A) (molar ratio) | | 1.1 | 1.1 | 1.2 | 1.2 | 1.1 | 1.1 | 1.2 | 1.1 |
| Hardness (durometer A) | | 38 | 35 | 41 | 47 | 31 | 24 | 27 | 44 |
| Tensile strength (MPa) | | 1.0 | 1.0 | 1.1 | 1.3 | 0.5 | 0.3 | 0.3 | 1.1 |
| Elongation at break (%) | | 130 | 150 | 120 | 150 | 90 | 90 | 80 | 130 |
| Total light transmittance (%) | | 90 | 88 | 86 | 81 | 93 | 93 | 94 | 51 |

**[Table 2]**

| Shear adhesive force (MPa) | | Example | | | | Comparative Example | | | |
|---|---|---|---|---|---|---|---|---|---|
| | | 1 | 2 | 3 | 4 | 1 | 2 | 3 | 4 |
| Adherend | Aluminum | 0.8 (100) | 0.9 (100) | 1.0 (100) | 1.1 (100) | 0.3 (100) | 0.2 (100) | 0.2 (100) | 0.9 (100) |
| | Epoxy glass resin | 0.9 (100) | 0.9 (100) | 1.0 (100) | 1.2 (100) | 0.4 (100) | 0.2 (100) | 0.2 (100) | 0.9 (100) |
| | Glass | 0.9 (100) | 0.9 (100) | 1.0 (100) | 1.2 (100) | 0.4 (100) | 0.2 (100) | 0.2 (100) | 1.0 (100) |

In () of the shear adhesive force, the cohesive failure rate (area%) is shown.

The cured products obtained by curing the compositions of Examples 1 to 4 that satisfied the requirements of the present invention had higher hardness, tensile strength, and elongation at break than the cured product obtained by curing the compositions of Comparative Examples 1 to 3 that were free of the component (C), and on the other hand, the total light transmittance was not so low as 80% or more, and also exhibited good adhesive property to various adherends. The cured product obtained by curing the composition of Comparative Example 4 exhibited good adhesive property to various adherends, and the compounded spherical silica particles had high hardness, tensile strength, and elongation at break, but had a significantly low total light transmittance value.

From the above results, the adhesive agent composition of the present invention is particularly useful as a material of an optical component because it gives a cured product having good light transmittance and good adhesive property, and excellent rubber strength.

## Claims

1. A curable fluoropolyether adhesive agent composition comprising:
(A) 100 parts by weight of a linear polyfluoro compound having two or more alkenyl groups in one molecule and having a perfluoropolyether structure in a main chain,
(B) a fluorine-containing organohydrogensiloxane having, in one molecule, a monovalent perfluoroalkyl group or a monovalent perfluorooxyalkyl group, or having a divalent perfluoroalkylene group or a divalent perfluorooxyalkylene group, and further having two or more hydrogen atoms directly bonded to silicon atoms (SiH groups), and free of an epoxy group and an alkoxy group directly bonded to a silicon atom in the molecule,
(C) 0.1 to 120 parts by weight of sodium fluoride,
(D) 0.1 to 2,000 ppm in terms of the weight of platinum group metal atoms with respect to the component (A) of a platinum group metal-based catalyst,
(E) 0.1 to 20 parts by weight of an organopolysiloxane having, in one molecule, a hydrogen atom directly bonded to a silicon atom (SiH group), a monovalent perfluoroalkyl group or a monovalent perfluorooxyalkyl group, and an epoxy group or a trialkoxysilyl group bonded to a silicon atom via a divalent hydrocarbon group which may contain an oxygen atom, or both groups,
wherein the compounding amount of the component (B) is an amount such that the amount of hydrogen atoms directly bonded to silicon atoms in the component (B) is 0.5 to 3 mol, based on 1 mol of alkenyl groups contained in the composition.

2. The curable fluoropolyether adhesive agent composition according to claim 1, wherein the alkenyl group content of the linear polyfluoro compound as the component (A) is 0.005 to 0.3 mol/100 g.

3. The curable fluoropolyether adhesive agent composition according to claim 1 or 2, wherein
the perfluoropolyether structure of the component (A) contains a structure having the following general formula (1):
-(CₐF₂ₐO)_{b}- (1)
wherein a is an integer of 1 to 6, and b is an integer of 4 to 302.

4. The curable fluoropolyether adhesive agent composition according to any one of claims 1 to 3, wherein the component (A) is a linear polyfluoro compound having the following general formula (2): 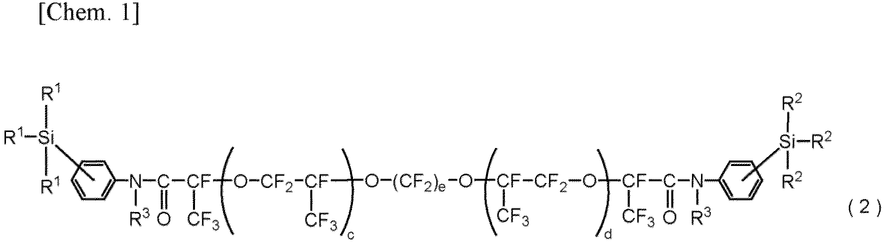 wherein R¹ and R² are alkenyl groups or monovalent hydrocarbon groups free of unsubstituted or substituted aliphatic unsaturated bond, R¹ is independent of each other, R² is also independent of each other, 2 or more of a total of 6 of R¹ and R² are alkenyl groups, R³ is each independently a hydrogen atom or an unsubstituted or substituted monovalent hydrocarbon group, c and d are each an integer of 1 to 150, the average value of c + d is 2 to 300, and e is an integer of 1 to 6,
and/or the following general formula (3): 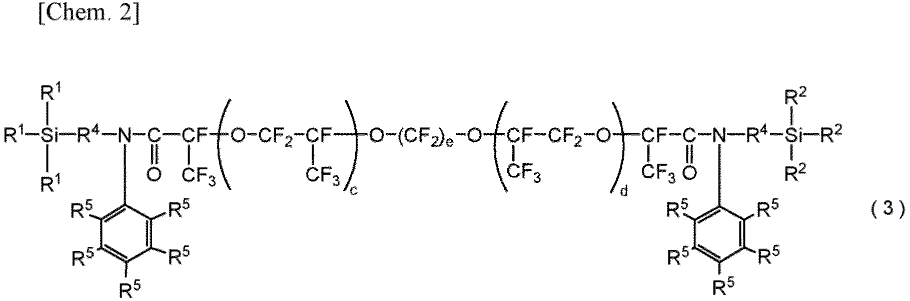 wherein R¹ and R² are alkenyl groups or monovalent hydrocarbon groups free of unsubstituted or substituted aliphatic unsaturated bond, R¹ is independent of each other, R² is also independent of each other, 2 or more of a total of 6 of R¹ and R² are an alkenyl group, R⁴ is each independently an alkylene group having 1 to 6 carbon atoms, R⁵ is each independently a hydrogen atom or an alkyl group having 1 to 4 carbon atoms which may be substituted with fluorine, c and d are each an integer of 1 to 150, the average value of c + d is 2 to 300, and e is an integer of 1 to 6.

5. The curable fluoropolyether adhesive agent composition according to any one of claims 1 to 4, wherein the component (E) is a cyclic organopolysiloxane having the following general formula (16): 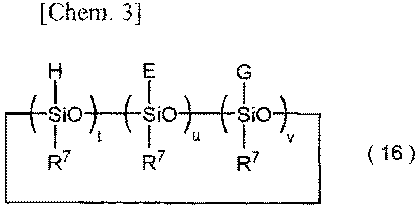 wherein t is an integer of 1 to 6, u is an integer of 1 to 4, v is an integer of 1 to 4, and t + u + v is an integer of 4 to 10, R⁷ is each independently an unsubstituted or substituted alkyl group having 1 to 20 carbon atoms or an aryl group having 6 to 20 carbon atoms, E is each independently a monovalent perfluoroalkyl group or a monovalent perfluorooxyalkyl group bonded to a silicon atom via a divalent hydrocarbon group which may contain a silicon atom, an oxygen atom and a nitrogen atom, and G is each independently an epoxy group or a trialkoxysilyl group bonded to a silicon atom via a divalent hydrocarbon group which may contain an oxygen atom, provided that the order of bonding of -(SiO)(H)R⁷-, - (SiO)(E)R⁷- and -(SiO)(G)R⁷- is not limited.

6. The curable fluoropolyether adhesive agent composition according to any one of claims 1 to 5, which gives a cured product having a total light transmittance of 80% or more at a thickness of 2 mm measured according to JIS K7361-1.

7. An optical component comprising a cured product of the curable fluoropolyether adhesive agent composition according to any one of claims 1 to 6.

## Patentansprüche

1. Härtbare Fluorpolyether-Klebstoffzusammensetzung, umfassend:
(A) 100 Gewichtsteile einer linearen Polyfluorverbindung mit zwei oder mehr Alkenylgruppen in einem Molekül und mit einer Perfluorpolyetherstruktur in einer Hauptkette,
(B) ein fluorhaltiges Organohydrogensiloxan, das in einem Molekül eine einwertige Perfluoralkylgruppe oder eine einwertige Perfluoroxyalkylgruppe aufweist oder das eine zweiwertige Perfluoralkylengruppe oder eine zweiwertige Perfluoroxyalkylengruppe aufweist und das ferner zwei oder mehr Wasserstoffatome, die direkt an Siliciumatome gebunden sind (SiH-Gruppen) aufweist und das frei von einer Epoxidgruppe und einer Alkoxygruppe ist, die direkt an ein Siliciumatom im Molekül gebunden ist,
(C) 0,1 bis 120 Gewichtsteile Natriumfluorid,
(D) 0,1 bis 2.000 ppm, bezogen auf das Gewicht von Platingruppenmetallatomen, in Bezug auf die Komponente (A) eines Katalysators auf Basis eines Platingruppenmetalls,
(E) 0,1 bis 20 Gewichtsteile eines Organopolysiloxans, das in einem Molekül ein direkt an ein Siliciumatom gebundenes Wasserstoffatom (SiH-Gruppe), eine einwertige Perfluoralkylgruppe oder eine einwertige Perfluoroxyalkylgruppe und eine Epoxidgruppe oder eine Trialkoxysilylgruppe, die über eine zweiwertige Kohlenwasserstoffgruppe, die ein Sauerstoffatom enthalten kann, oder beide Gruppen an ein Siliciumatom gebunden ist, aufweist,
wobei die Mischmenge der Komponente (B) eine solche Menge ist, dass die Menge der direkt an Siliciumatome gebundenen Wasserstoffatome in der Komponente (B) 0,5 bis 3 Mol beträgt, bezogen auf 1 Mol der in der Zusammensetzung enthaltenen Alkenylgruppen.

2. Härtbare Fluorpolyether-Klebstoffzusammensetzung nach Anspruch 1, wobei der Alkenylgruppengehalt der linearen Polyfluorverbindung als Komponente (A) 0,005 bis 0,3 mol/100 g beträgt.

3. Härtbare Fluorpolyether-Klebstoffzusammensetzung nach Anspruch 1 oder 2, wobei die Perfluorpolyetherstruktur der Komponente (A) eine Struktur mit der folgenden allgemeinen Formel (1) enthält:
-(CₐF₂ₐO)_{b}- (1)
worin a eine ganze Zahl von 1 bis 6 ist und b eine ganze Zahl von 4 bis 302 ist.

4. Härtbare Fluorpolyether-Klebstoffzusammensetzung nach einem der Ansprüche 1 bis 3, wobei die Komponente (A) eine lineare Polyfluorverbindung mit der folgenden allgemeinen Formel (2) ist: 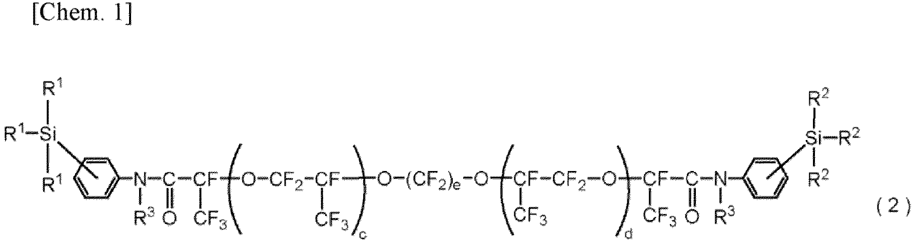 worin R¹ und R² Alkenylgruppen oder einwertige Kohlenwasserstoffgruppen ohne unsubstituierte oder substituierte aliphatische ungesättigte Bindung sind, R¹ unabhängig voneinander ist, R² ebenfalls unabhängig voneinander ist, 2 oder mehr von insgesamt 6 von R¹ und R² Alkenylgruppen sind, R³ jeweils unabhängig voneinander ein Wasserstoffatom oder eine unsubstituierte oder substituierte einwertige Kohlenwasserstoffgruppe ist, c und d jeweils eine ganze Zahl von 1 bis 150 sind, der Durchschnittswert von c + d 2 bis 300 ist und e eine ganze Zahl von 1 bis 6 ist, und/oder mit der folgenden allgemeinen Formel (3): 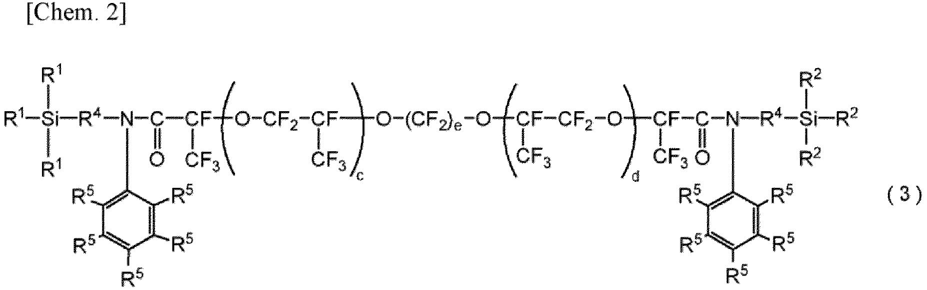 worin R¹ und R² Alkenylgruppen oder einwertige Kohlenwasserstoffgruppen ohne unsubstituierte oder substituierte aliphatische ungesättigte Bindung sind, R¹ unabhängig voneinander ist, R² ebenfalls unabhängig voneinander ist, 2 oder mehr von insgesamt 6 von R¹ und R² eine Alkenylgruppe sind, R⁴ jeweils unabhängig voneinander eine Alkylengruppe mit 1 bis 6 Kohlenstoffatomen ist, R⁵ jeweils unabhängig voneinander ein Wasserstoffatom oder eine Alkylgruppe mit 1 bis 4 Kohlenstoffatomen ist, die mit Fluor substituiert sein kann, c und d jeweils eine ganze Zahl von 1 bis 150 sind, der Durchschnittswert von c + d 2 bis 300 ist und e eine ganze Zahl von 1 bis 6 ist.

5. Härtbare Fluorpolyether-Klebstoffzusammensetzung nach einem der Ansprüche 1 bis 4, wobei die Komponente (E) ein cyclisches Organopolysiloxan mit der folgenden allgemeinen Formel (16) ist: 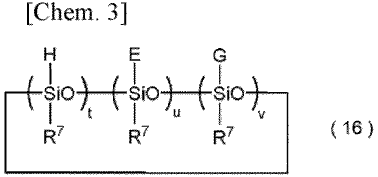 worin t eine ganze Zahl von 1 bis 6 ist, u eine ganze Zahl von 1 bis 4 ist, v eine ganze Zahl von 1 bis 4 ist und t + u + v eine ganze Zahl von 4 bis 10 ist, R⁷ jeweils unabhängig voneinander eine unsubstituierte oder substituierte Alkylgruppe mit 1 bis 20 Kohlenstoffatomen oder eine Arylgruppe mit 6 bis 20 Kohlenstoffatomen ist, E jeweils unabhängig voneinander eine einwertige Perfluoralkylgruppe oder eine einwertige Perfluoroxyalkylgruppe ist, die über eine zweiwertige Kohlenwasserstoffgruppe, die ein Siliciumatom, ein Sauerstoffatom und ein Stickstoffatom enthalten kann, an ein Siliciumatom gebunden ist, und G jeweils unabhängig voneinander eine Epoxidgruppe oder eine Trialkoxysilylgruppe ist, die über eine zweiwertige Kohlenwasserstoffgruppe, die ein Sauerstoffatom enthalten kann, an ein Siliciumatom gebunden ist, mit der Maßgabe, dass die Reihenfolge der Bindung von -(SiO)(H)R⁷-, -(SiO)(E)R⁷- und - (SiO)(G)R⁷- nicht beschränkt ist.

6. Härtbare Fluorpolyether-Klebstoffzusammensetzung nach einem der Ansprüche 1 bis 5, die ein gehärtetes Produkt mit einer Gesamtlichtdurchlässigkeit von 80% oder mehr bei einer Dicke von 2 mm, gemessen nach JIS K7361-1, ergibt.

7. Optische Komponente, umfassend ein gehärtetes Produkt der härtbaren Fluorpolyether-Klebstoffzusammensetzung nach einem der Ansprüche 1 bis 6.

## Revendications

1. Composition d'agent adhésif durcissable à base de fluoropolyéther, comportant :
(A) 100 parties en poids d'un composé polyfluoro linéaire ayant deux groupes alcényle ou plus dans une molécule et ayant une structure perfluoropolyéther dans une chaîne principale,
(B) un organohydrogénosiloxane contenant du fluor ayant, dans une molécule, un groupe perfluoroalkyle monovalent ou un groupe perfluorooxyalkyle monovalent, ou ayant un groupe perfluoroalkylène divalent ou un groupe perfluorooxyalkylène divalent, et ayant en outre deux atomes d'hydrogène ou plus directement liés à des atomes de silicium (groupes SiH), et exempt d'un groupe époxy et d'un groupe alcoxy directement liés à un atome de silicium dans la molécule,
(C) 0,1 à 120 parties en poids de fluorure de sodium,
(D) 0,1 à 2 000 ppm en termes de poids d'atomes de métal du groupe platine par rapport au composant (A) d'un catalyseur à base de métal du groupe platine,
(E) 0,1 à 20 parties en poids d'un organopolysiloxane ayant, dans une molécule, un atome d'hydrogène directement lié à un atome de silicium (groupe SiH), un groupe perfluoroalkyle monovalent ou un groupe perfluorooxyalkyle monovalent, et un groupe époxy ou un groupe trialcoxysilyle lié à un atome de silicium via un groupe hydrocarbure divalent qui peut contenir un atome d'oxygène, ou les deux groupes,
dans laquelle la quantité de mélange du composant (B) est une quantité telle que la quantité d'atomes d'hydrogène directement liés à des atomes de silicium dans le composant (B) est de 0,5 à 3 moles, sur la base de 1 mole de groupes alcényle contenus dans la composition.

2. Composition d'agent adhésif durcissable à base de fluoropolyéther selon la revendication 1, dans laquelle la teneur en groupe alcényle du composé polyfluoro linéaire en tant que composé (A) est de 0,005 à 0,3 mol/100 g.

3. Composition d'agent adhésif durcissable à base de fluoropolyéther selon la revendication 1 ou 2, dans laquelle
la structure perfluoropolyéther du composé (A) contient une structure ayant la formule générale (1) suivante :
-(CₐF₂ₐO)_{b}- (1)
dans laquelle a est un entier de 1 à 6, et b est un entier de 4 à 302.

4. Composition d'agent adhésif durcissable à base de fluoropolyéther selon l'une quelconque des revendications 1 à 3, dans laquelle le composant (A) est un composé polyfluoro linéaire ayant la formule générale (2) suivante : 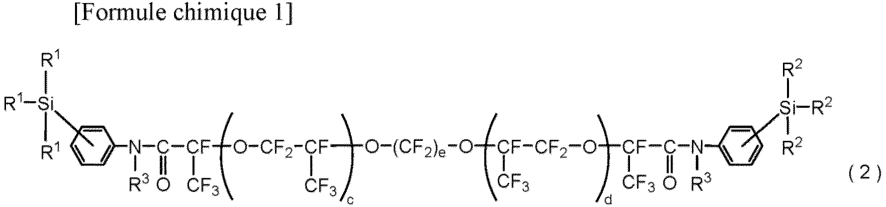
dans laquelle R¹ et R² sont des groupes alcényle ou des groupes hydrocarbure monovalents exempts de liaison insaturée aliphatique non substituée ou substituée, les éléments R¹ sont indépendants les uns des autres, les éléments R² sont également indépendants les uns des autres, 2 éléments ou plus sur un total de 6 R¹ et R² sont des groupes alcényle, les éléments R³ sont chacun, indépendamment l'un de l'autre, un atome d'hydrogène ou un groupe hydrocarbure monovalent non substitué ou substitué, c et d sont chacun un entier de 1 à 150, la valeur moyenne de c + d vaut de 2 à 300, et e est un entier de 1 à 6,
et/ou la formule générale (3) suivante : 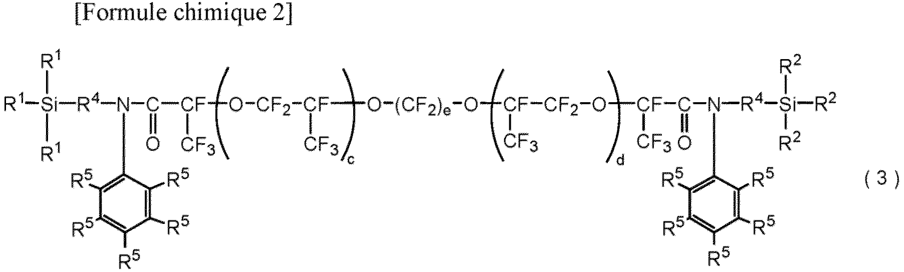
dans laquelle R¹ et R² sont des groupes alcényle ou des groupes hydrocarbure monovalents exempts de liaison insaturée aliphatique non substituée ou substituée, les éléments R¹ sont indépendants les uns des autres, les éléments R² sont également indépendants les uns des autres, 2 éléments ou plus sur un total de 6 R¹ et R² sont un groupe alcényle, les éléments R⁴ sont chacun, indépendamment l'un de l'autre, un groupe alkylène possédant 1 à 6 atomes de carbone, les éléments R⁵ sont chacun, indépendamment les uns des autres, un atome d'hydrogène ou un groupe alkyle possédant 1 à 4 atomes de carbone qui peuvent être remplacés par un fluor, c et d sont chacun un entier de 1 à 150, la valeur moyenne de c + d vaut de 2 à 300, et e est un entier de 1 à 6.

5. Composition d'agent adhésif durcissable à base de fluoropolyéther selon l'une quelconque des revendications 1 à 4, dans laquelle le composant (E) est un organopolysiloxane cyclique ayant la formule générale (16) suivante : 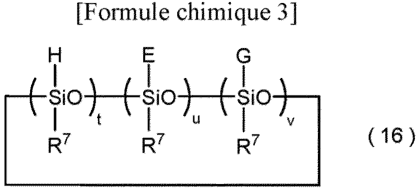 dans laquelle t est un entier de 1 à 6, u est un entier de 1 à 4, v est un entier de 1 à 4, et t + u + v est un entier de 4 à 10, les éléments R⁷ sont chacun, indépendamment les uns des autres, un groupe alkyle non substitué ou substitué possédant 1 à 20 atomes de carbone ou un groupe aryle possédant 6 à 20 atomes de carbone, les éléments E sont chacun, indépendamment les uns des autres, un groupe perfluoroalkyle monovalent ou un groupe perfluorooxyalkyle monovalent lié à un atome de silicium via un groupe hydrocarbure divalent qui peut contenir un atome de silicium, un atome d'oxygène et un atome d'azote, et les éléments G sont chacun, indépendamment les uns des autres, un groupe époxy ou un groupe trialcoxysilyle lié à un atome de silicium via un groupe hydrocarbure divalent qui peut contenir un atome d'oxygène, à condition que l'ordre de liaison de -(SiO)(H)R⁷-, - (SiO)(E)R⁷- et -(SiO)(G)R⁷- ne soit pas limité.

6. Composition d'agent adhésif durcissable à base de fluoropolyéther selon l'une quelconque des revendications 1 à 5, qui donne un produit durci ayant un facteur de transmission de la lumière totale de 80 % ou plus à une épaisseur de 2 mm, mesuré conformément à la norme JIS K7361-1.

7. Composant optique comportant un produit durci de la composition d'agent adhésif durcissable à base de fluoropolyéther selon l'une quelconque des revendications 1 à 6.
